(19) Europäisches Patentamt
European Patent Office
Office européen des brevets

(11) **EP 4 588 984 A1**

(12) **EUROPEAN PATENT APPLICATION**
published in accordance with Art. 153(4) EPC

(43) Date of publication:
**23.07.2025 Bulletin 2025/30**

(21) Application number: **23865445.3**

(22) Date of filing: **11.09.2023**

(51) International Patent Classification (IPC):
*C09D 11/023* (2014.01)     *C09D 11/106* (2014.01)
*C09D 11/107* (2014.01)     *C09D 11/108* (2014.01)

(52) Cooperative Patent Classification (CPC):
**C09D 11/023; C09D 11/106; C09D 11/107; C09D 11/108**

(86) International application number:
**PCT/JP2023/032966**

(87) International publication number:
**WO 2024/058091 (21.03.2024 Gazette 2024/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.09.2022 JP 2022147293**

(71) Applicant: **Kaneka Corporation**
**Osaka-shi, Osaka 530-8288 (JP)**

(72) Inventor: **SONODA, Takeshi**
**Takasago-shi, Hyogo 676-8688 (JP)**

(74) Representative: **Vossius & Partner**
**Patentanwälte Rechtsanwälte mbB**
**Siebertstrasse 3**
**81675 München (DE)**

(54) **AQUEOUS INK COMPOSITION**

(57)     An object is to provide an aqueous ink composition that has excellent adhesion with respect to at least one selected from the group consisting of a polyolefin base material, a polyester base material, and a polyamide base material. The object is achieved by using an aqueous ink composition which contains: (A) a vinyl chloride-based resin emulsion and/or an acrylic resin emulsion; and at least one selected from the group consisting of (B) a polyolefin-based resin emulsion and (C) an alkali-soluble resin.

**EP 4 588 984 A1**

## Description

Technical Field

The present invention relates to an aqueous ink composition.

Background Art

A vinyl chloride-based resin is excellent in chemical resistance, water resistance, weather resistance, flame retardancy, processability, coloring, and the like. Therefore, the vinyl chloride-based resin is used in various applications. Examples of such applications include paint and ink. For example, Patent Literature 1 discloses a primer ink for inkjet recording, which includes an acryl-vinyl chloride-based emulsion, a hydrazine derivative that has at least two hydrazine residues, etc. and water.

Citation List

[Patent Literature]

[Patent Literature 1]
Japanese Patent Application Publication Tokukai No. 2018-12219

Summary of Invention

Technical Problem

Base materials to which ink is applied include not only absorbent base materials such as paper but also poorly-absorbent base materials such as film. There are various types of a film base material, in particular. However, in the above conventional technique, adhesion of ink to a film base material has not been sufficient depending on a type of the film base material. In this regard, there has been room for improvement.

An object of an aspect of the present invention is to provide an aqueous ink composition that has excellent adhesion with respect to at least one selected from the group consisting of a polyolefin base material, a polyester base material, and a polyamide base material.

Solution to Problem

In order to solve the above problem, an aqueous ink composition in accordance with an embodiment of the present invention contains: (A) a vinyl chloride-based resin emulsion and/or an acrylic resin emulsion; and at least one selected from the group consisting of (B) a polyolefin-based resin emulsion and (C) an alkali-soluble resin.

Advantageous Effects of Invention

An aspect of the present invention makes it possible to provide an aqueous ink composition that has excellent adhesion with respect to at least one film base material selected from the group consisting of a polyolefin base material, a polyester base material, and a polyamide base material.

Description of Embodiments

The following description will discuss an embodiment of the present invention. However, the present invention is not limited to the embodiment. The present invention is not limited to the configurations described below, but may be altered in various ways within the scope of the claims. The present invention also encompasses, in its technical scope, any embodiment or example derived by combining technical means disclosed in differing embodiments or Examples. Furthermore, it is possible to form a new technical feature by combining technical means disclosed in differing embodiments. All academic and patent documents cited herein are incorporated herein by reference. Any numerical range expressed as "A to B" in the present specification means "not less than A and not more than B (i.e., a range from A to B which includes both A and B)" unless otherwise stated. Further, "(meth)acrylic ..." is intended to include both of "methacrylic ..." and "acrylic ...".

[1. Aqueous ink composition]

An aqueous ink composition in accordance with an embodiment of the present invention contains: (A) a vinyl chloride-based resin emulsion and/or an acrylic resin emulsion; and at least one selected from the group consisting of (B) a polyolefin-based resin emulsion and (C) an alkali-soluble resin.

[1-1. (A) component]

The aqueous ink composition in accordance with an embodiment of the present invention includes, as an (A) component, a vinyl chloride-based resin emulsion and/or an acrylic resin emulsion.

[1-1-1. Vinyl chloride-based resin emulsion]

The "vinyl chloride-based resin emulsion" refers to an emulsion of a "vinyl chloride-based resin", and the "vinyl chloride-based resin" refers to a resin which is obtained by polymerizing a monomer mixture containing a vinyl chloride monomer. The "vinyl chloride-based resin" need only be a resin which is obtained by polymerizing a monomer mixture containing a vinyl chloride monomer. However, the "vinyl chloride-based resin" is a resin which is obtained by polymerizing a monomer containing, for example, preferably not less than 30 parts by weight, more preferably not less than 40 parts by weight, and even more preferably not less than 45 parts by weight of the vinyl chloride monomer in a case where the total amount of the monomer mixture is regarded as 100 parts by weight. Further, an upper limit of the amount of the vinyl chloride monomer contained with respect to the total amount of the monomer mixture only need be not more than 100 parts by weight.

The "vinyl chloride-based resin" is not particularly limited. Examples of the vinyl chloride-based resin include a vinyl chloride resin, a vinyl chloride-acrylic composite resin, a vinyl chloride-acrylic copolymer, a vinyl chloride-urethane composite resin, a vinyl chloride-vinyl acetate copolymer, a vinyl chloride-ethylene copolymer, and a vinyl chloride-vinylidene chloride copolymer. The "vinyl chloride resin" in the present specification refers to a resin that is mainly composed of vinyl chloride. Preferably, the "vinyl chloride resin" is a resin which contains more than 90 parts by weight and not more than 100 parts of the vinyl chloride monomer in a case where the total amount of the monomer mixture is regarded as 100 parts by weight. In other words, in the present specification, the "vinyl chloride resin" is intended to include a polyvinyl chloride which contains only a vinyl chloride monomer(s), and a resin mainly composed of a vinyl chloride which contains more than 90 parts by weight to not more than 100 parts of a vinyl chloride monomer(s). Further, the "acrylic-containing resin" refers to a resin that is mainly composed of an acrylic, and more preferably refers to a resin that contains 50 parts by weight to 100 parts of an acrylic monomer(s) in a case where the total amount of the monomer mixture is regarded as 100 parts by weight.

Further, the "vinyl chloride-based resin emulsion" can be any emulsion of a "vinyl chloride-based resin". For example, it is possible to directly use, as the "vinyl chloride-based resin emulsion", a "vinyl chloride-based resin emulsion" which is prepared by emulsion polymerization, though the "vinyl chloride-based resin emulsion" is not limited thereto. Alternatively, it is possible to use a "vinyl chloride-based resin emulsion" which is obtained by forcibly emulsifying, in water with use of a surfactant and/or the like, a vinyl chloride-based resin which has been produced by another method. Further, it is also possible to use a "vinyl chloride-based resin emulsion" which is obtained by (i) copolymerizing, with a vinyl chloride-based resin, a monomer having a hydrophilic group, and (ii) adding water to a resultant hydrophilic group-containing polyvinyl chloride resin and causing self-emulsification.

[1-1-1-1. Vinyl chloride-acrylic composite resin emulsion]

Examples of the vinyl chloride-acrylic composite resin emulsion include: an emulsion of a resin which is obtained by polymerizing an acrylic monomer in the presence of a vinyl chloride resin; an emulsion of a resin which is obtained by polymerizing a vinyl chloride monomer in the presence of an acrylic-containing resin; and an emulsion of a resin which is obtained by polymerizing a vinyl chloride monomer in the presence of a styrene-(meth)acrylic acid ester oligomer and/or a (meth)acrylic ester oligomer.

<Emulsion of composite resin obtained by polymerizing acrylic monomer in presence of vinyl chloride resin>

Examples of the resin obtained by polymerizing an acrylic monomer in the presence of the vinyl chloride resin include a vinyl chloride-acrylic composite resin obtained by, in multistage emulsion polymerization, (i) polymerizing a monomer(s) mainly composed of by a vinyl chloride monomer in a first stage (hereinafter, referred to as [step 1]) and (ii) polymerizing a monomer(s) mainly composed of an acrylic monomer in second and subsequent stages (hereinafter, referred to as [step 2]).

Examples of the vinyl chloride-acrylic composite resin include a resin in which an acrylic-containing resin is composited, the acrylic-containing resin being obtained by, in multistage emulsion polymerization, (i) in the [step 1], obtaining a vinyl chloride resin by polymerizing a monomer mixture constituted by more than 90 parts by weight and not more than 100 parts of (a1) a vinyl chloride monomer and not less than 0 parts by weight and less than 10 parts by weight of (a2) an ethylenically unsaturated monomer that is copolymerizable with the vinyl chloride monomer (wherein a total amount of (a1) and (a2) is 100 parts by weight) and (ii) in the [step 2], polymerizing, in the presence of the vinyl chloride resin, a monomer mixture constituted by 50 parts by weight to 100 parts by weight of (b1) (meth)acrylic acid alkyl ester and 0 parts by weight to 50 parts by weight of (b2) an ethylenically unsaturated monomer that is copolymerizable with the (b1) (meth)acrylic acid alkyl ester (wherein a total amount of (b1) and (b2) is 100 parts by weight).

A mechanism thereof is considered to be as follows. That is, the monomer(s) for forming the acrylic-containing resin penetrate(s) vinyl chloride resin particles obtained in the [step 1]. The monomer(s) is/are then polymerized in the vinyl chloride resin particles. As a result, the vinyl chloride resin and the acrylic-containing resin are present in an entangled state, without having a clear core/shell structure, in the particles. As a result, it is possible to obtain composite resin particles having properties differing from those in the conventional technique.

(Vinyl chloride resin)

The vinyl chloride resin is obtained by copolymerizing, by emulsion polymerization, the monomer mixture constituted by more than 90 parts by weight and not more than 100 parts of the (a1) vinyl chloride monomer and not less than 0 parts by weight and less than 10 parts by weight of the (a2) ethylenically unsaturated monomer that is copolymerizable with the vinyl chloride monomer. This is carried out as the first stage of the multistage emulsion polymerization. Note that the [step 1] may be carried out at one time or may be alternatively carried out over a plurality of times. In the latter case, the composition of the monomer mixture is changed while the [step 1] is carried out over the plurality of times.

In the vinyl chloride-acrylic composite resin, functions are imparted mainly by the acrylic-containing resin obtained in the [step 2] in the multistage emulsion polymerization. Therefore, the composition of the vinyl chloride resin in the [step 1] may be relatively simple, and the (a1) vinyl chloride monomer may be used alone. However, copolymerization with another monomer is not denied. As necessary, the (a1) vinyl chloride monomer can be used in combination with the (a2) ethylenically unsaturated monomer that is copolymerizable with the vinyl chloride monomer. The (a2) is used in an amount of preferably not less than 0 parts by weight and less than 10 parts by weight, and more preferably 0 parts by weight to 5 parts by weight.

The (a2) ethylenically unsaturated monomer that is used in the [step 1] and that is copolymerizable with the vinyl chloride monomer is not particularly limited, and examples thereof include all known monomers that are copolymerizable with vinyl chloride, the known monomers including: olefins such as ethylene, propylene, and butene; vinyl esters such as vinyl acetate, vinyl versatate, vinyl propionate, and vinyl stearate; vinyl ethers such as methyl vinyl ether, ethyl vinyl ether, octyl vinyl ether, and lauryl vinyl ether; vinylidenes such as vinylidene chloride; unsaturated carboxylic acids and acid anhydrides thereof such as acrylic acid, methacrylic acid, fumaric acid, maleic acid, itaconic acid, maleic anhydride, and itaconic anhydride; unsaturated carboxylic acid esters such as methyl (meth)acrylate, ethyl (meth)acrylate, monomethyl maleate, dimethyl maleate, and butyl benzyl maleate; aromatic vinyl compounds such as styrene, $\alpha$-methylstyrene, and divinylbenzene; and unsaturated nitriles such as acrylonitrile. One of these (a2) ethylenically unsaturated monomers that are copolymerizable with the vinyl chloride monomer may be used solely. Alternatively, two or more may be used in combination.

It is possible to also use, in combination, (F) a compound having at least two non-conjugated double bonds, for the purpose of (i) crosslinking of the vinyl chloride resin in the [step 1] and/or (ii) introduction of a grafting point with the acrylic-containing resin in the [step 2].

The (F) compound having at least two non-conjugated double bonds that is used in the [step 1] is not particularly limited, and examples thereof include allyl methacrylate, allyl acrylate, triallyl cyanurate, triallyl isocyanurate, diallyl fumarate, diallyl maleate, diallyl phthalate, triallyl trimellitate, trimethylolpropane diallyl ether, divinyl adipate, divinylbenzene, ethylene glycol dimethacrylate, propylene glycol dimethacrylate, 1,3-butylene dimethacrylate, monoethylene glycol dimethacrylate, diethylene glycol dimethacrylate, triethylene glycol dimethacrylate, trimethylolpropane trimethacrylate, polyethylene glycol dimethacrylate, dipropylene glycol dimethacrylate, polypropylene glycol diacrylate, polyethyleneglycol diacrylate, and bisphenol-modified polyethyleneglycol diacrylate.

In particular, for the purpose of the introduction of the grafting point with the acrylic-containing resin in the [step 2], the (F) compound having at least two non-conjugated double bonds is preferably a compound having two or more allyl groups, and particularly preferably triallyl cyanurate (TAC), triallyl isocyanurate, or triallyl trimellitate, each of which has three allyl groups. One of the above (F) compounds having at least two non-conjugated double bonds may be used solely. Alternatively, two or more may be used in combination.

The (F) compound having at least two non-conjugated double bonds is used in an amount of preferably not more than 5 parts by weight, more preferably not more than 1 part by weight, and even more preferably not more than 0.3 parts by weight, with respect to the total amount, which is regarded as 100 parts by weight, of the (a1) vinyl monomer and the (a2) ethylenically unsaturated monomer that is copolymerizable with the vinyl chloride monomer. In a case where the (F) is used in an amount of not more than 5 parts by weight, a degree of crosslinking of the vinyl chloride-based resin does not become excessively high and, accordingly, penetration of the acrylic monomer to be polymerized in the [step 2] is unlikely to be prevented. Therefore, compositing in the particles progresses successfully.

When the emulsion polymerization is carried out in the [step 1], an ionic or nonionic surfactant which is generally used in emulsion polymerization can be used.

Examples of the ionic surfactant used in the [step 1] include: anionic surfactants having a polyoxyalkylene chain, such as polyoxyethylene nonylphenyl ether sulfate, polyoxyethylene allyl ether sulfate, octylphenoxy ethoxyethyl sulfonate, polyoxyethylene tridecyl ether sulfate, and polyoxyethylene polycyclic phenyl ether sulfate; sulfonates such as sodium lauryl sulfonate, sodium dodecylbenzene sulfonate, and sodium isooctylbenzene sulfonate; ammonium salts such as imidazoline laurate and ammonium hydroxide; and sulfosuccinic acid-based surfactants such as sodium dilauryl sulfosuccinate.

Examples of the nonionic surfactant used in the [step 1] include polyoxyalkylenes such as polyoxyethylene dodecyl ether, polyoxyethylene nonylphenyl ether, polyoxyethylene lauryl ether, and polyoxyethylene oxypropylene lauryl ether.

One of the above-described surfactants used in the [step 1] may be used solely. Alternatively, two or more may be used in combination.

The surfactant in the [step 1] is used in an amount of preferably not more than 10 parts by weight, and more preferably 0.5 parts by weight to 8 parts by weight, with respect to the total amount, which is regarded as 100 parts by weight, of the monomer mixture of the vinyl chloride resin.

In the [step 1], (G) a reactive surfactant having a polymerizable double bond in one molecule is more preferably used as a part or all of the surfactant used, in terms of suppression of generation of new particles during the emulsion polymerization and the water resistance and weather resistance of a coating film to be obtained. In particular, by using a reactive surfactant having a polyoxyalkylene group in a molecule, it is possible to enhance mechanical stability of a resin emulsion to be obtained.

Examples of the (G) reactive surfactant having a polymerizable double bond in one molecule used in the [step 1] include: ADEKAREASOAP (registered trademark) ER-10, ER-20, ER-30, ER-40, SR-05, SR-10, SR-20, SR-1025, SR-2025, SR-3025, NE-10, NE-20, NE-30, NE-40, and SE-10N) manufactured by ADEKA CORPORATION; Antox (registered trademark) MS-60, RMA-1120, RMA-564, RMA-568, and RMA-506 manufactured by Nippon Nyukazai Co., Ltd.; Aqualon (registered trademark) KH-05, KH-10, RN-20, RN-30, RN-50, RN-2025, HS-10, HS-20, HS-1025, BC05, BC10, BC0515, BC1025, AR-10, AR-20, AR-1025, AR-2020, AN-10, AN-20, AN-30, and AN-5065 manufactured by DKS Co. Ltd.; ELEMINOL (registered trademark) JS-2, JS-20, RS-30, and RS-3000 manufactured by Sanyo Chemical Industries, Ltd., and LATEMUL (registered trademark) S-180, S-180A, PD-104, PD-420, PD-430, and PD-430S manufactured by Kao Corporation.

Examples of a polymerization initiator used in the [step 1] include organic peroxides, azo-based initiators, peroxodisulfates (also referred to as "persulfates"), and hydrogen peroxide solutions. Examples of the organic peroxides include t-butyl hydroperoxide, cumene hydroperoxide, t-butyl peroxy isopropylcarbonate, paramenthane hydroperoxide, 1,1,3,3-tetramethylbutyl hydroperoxide, benzoyl peroxide, and lauroyl peroxide. Examples of the azo-based initiators include 2,2'-azobisisobutyronitrile, 2,2'-azobis(2,4-dimethylvaleronitrile), and 2,2'-azobis(4-methoxy-2,4-dimethylvaleronitrile). Examples of the peroxodisulfates include ammonium persulfate, potassium persulfate, and sodium persulfate. One of these polymerization initiators may be used solely. Alternatively, two or more may be used in combination.

The polymerization initiator used in the [step 1] can be used, as necessary, in combination with a reducing agent such as sodium sulfite, sodium thiosulfate, sodium hydroxymethanesulfinate, ascorbic acid, sodium ascorbate, rongalite, Bruggolite (registered trademark) FF-6, and/or thiourea dioxide. Note that, in terms of environmental considerations, the reducing agent is particularly preferably Bruggolite (registered trademark) FF-6 and/or thiourea dioxide, each of which does not generate formaldehyde. One of these reducing agents may be used solely. Alternatively, two or more may be used in combination.

The polymerization initiator in the [step 1] is used in an amount of preferably 0.01 parts by weight to 5 parts by weight, and more preferably 0.02 parts by weight to 3 parts by weight, with respect to the total amount, which is regarded as 100 parts by weight, of the monomer mixture of the (a1) and the (a2). In a case where the amount of the polymerization initiator used is not less than 0.01 parts by weight, the polymerization progresses easily. On the other hand, in a case where the amount of the polymerization initiator used is not more than 5 parts by weight, it is possible to suitably control generation of heat.

Note that the organic peroxide is preferably used as a redox polymerization initiator in combination with an oxidation-reduction catalyst and the reducing agent, particularly from the viewpoint of polymerization stability and water resistance. As the oxidation-reduction catalyst, for example, a transition metal complex generated by using a transition metal salt and a chelating agent in combination can be used. Examples of the transition metal salt include ferrous (II) sulfate, copper (II) sulfate, and copper chloride. Examples of the chelating agent include disodium ethylenediaminetetraacetate (EDTA·2Na), tartaric acid, and ammonia. In a case where ferrous (II) sulfate is used as the transition metal salt and disodium ethylenediaminetetraacetate (EDTA·2Na) is used as the chelating agent, Fe-EDTA is generated and functions as the oxidation-reduction catalyst.

(Acrylic-containing resin)

The acrylic-containing resin imparts various functions by, in the [step 2], compositing, with a vinyl chloride resin, a polymer being produced by polymerization of an acrylic monomer mixture in the presence of the vinyl chloride resin obtained in the [step 1].

The mechanism thereof is considered to be as follows: the monomer(s) for forming the acrylic-containing resin penetrates the vinyl chloride resin particles present in a system, and is then polymerized in the particles; and as a result, the vinyl chloride resin and the acrylic-containing resin are present in an entangled state in the particles.

In the above configuration, there is a possibility that the location of the acrylic-containing resin in the particles can be arbitrarily adjusted, by adjusting the composition of the monomer(s) for forming the acrylic-containing resin so that balance between hydrophilicity and hydrophobicity is changed. That is, in a case where the composition is employed with which the acrylic-containing resin is more hydrophobic than the vinyl chloride resin, it is considered possible to cause a large amount of the acrylic-containing resin to be present closer to the center in the particles. In contrast, in a case where the composition is employed with which the acrylic-containing resin is more hydrophilic than the vinyl chloride-based resin, it is considered possible to cause a large amount of the acrylic-containing resin to be present closer to the surface in the particles. In a case where the acrylic-containing resin is caused to have hydrophilicity or hydrophobicity comparable to that of the vinyl chloride resin, it is considered that the acrylic-containing resin and the vinyl chloride resin are present almost uniformly.

Note that the [step 2] may be carried out at one time or may be alternatively carried out over a plurality of times. In the latter case, the composition of the monomer mixture is changed while the [step 2] is carried out over a plurality of times. The polymerization composition of the acrylic-containing resin in the [step 2] is as follows: 50 parts by weight to 100 parts by weight of the (b1) (meth)acrylic acid alkyl ester and 0 parts by weight to 50 parts by weight of the (b2) ethylenically unsaturated monomer that is copolymerizable with the (meth)acrylic acid alkyl ester (wherein the total amount of the (b1) and the (b2) is 100 parts by weight).

Specific examples of the (b1) (meth)acrylic acid alkyl ester used in the [step 2] include methyl (meth)acrylate, ethyl (meth)acrylate, iso-propyl (meth)acrylate, n-butyl (meth)acrylate, iso-butyl (meth)acrylate, tert-butyl (meth)acrylate, cyclohexyl (meth)acrylate, 2-ethylhexyl (meth)acrylate, isodecyl (meth)acrylate, lauryl (meth)acrylate, tridecyl (meth) acrylate, and stearyl (meth)acrylate. One of these (b1) (meth)acrylic acid alkyl esters may be used solely. Alternatively, two or more may be used in combination.

The (b2) ethylenically unsaturated monomer that is copolymerizable with the (meth)acrylic acid alkyl ester that is used in the [step 2] is not particularly limited, provided that the (b2) ethylenically unsaturated monomer is copolymerizable with the (b1) (meth)acrylic acid alkyl ester. Specific examples of the (b2) include: aromatic hydrocarbon-based vinyl monomers such as styrene, $\alpha$-methylstyrene, chlorostyrene, 4-hydroxystyrene, and vinyltoluene; vinyl esters such as vinyl acetate, vinyl propionate, and vinyl versatate; allyl compounds; nitrile group-containing vinyl-based monomers such as (meth)acrylonitrile; compounds such as AS-6, AN-6, AA-6, AB-6, and AK-5, each of which is a macro monomer manufactured by TOAGOSEI CO., LTD.; and vinyl methyl ether, propylene, butadiene, vinyl chloride, and vinylidene chloride. One of these (b2) ethylenically unsaturated monomers that are copolymerizable with the (meth)acrylic acid alkyl ester may be used solely. Alternatively, two or more may be used in combination.

Further, in an embodiment of the present invention, a vinyl-based monomer having an acid group can also be used as the (b2) used in the [step 2]. By having an acid group, it is possible to enhance the mechanical stability and chemical stability of the resin emulsion to be obtained. Further, it is possible to enhance the adhesion of the resin emulsion to a base material in a case where the resin emulsion is used as a coating film.

Specific examples of the vinyl-based monomer having an acid group include: unsaturated carboxylic acids and acid anhydrides thereof such as acrylic acid, methacrylic acid, fumaric acid, maleic acid, itaconic acid, maleic anhydride, and itaconic anhydride; and monomers having a sulfonic acid group, such as sodium styrene sulfonate, sodium 2-sulfoethyl methacrylate, ammonium 2-sulfoethyl methacrylate, acrylamide tert-butyl sulfonic acid, and sodium acrylamide tert-butyl sulfonate. One of these vinyl-based monomers each having an acid group may be used solely. Alternatively, two or more may be used in combination.

The vinyl-based monomer having an acid group is used in an amount of preferably 0.2 parts by weight to 10 parts by weight, more preferably 0.5 part by weight to 10 parts by weight, and even more preferably 1 part by weight to 5 parts by weight, in a case where the total amount of the monomer mixtures for forming the vinyl chloride resin and the acrylic-containing resin is regarded as 100 parts by weight. In a case where the vinyl-based monomer having an acid group is used in an amount of not less than 0.2 parts by weight, the resin emulsion to be obtained has excellent mechanical stability and excellent chemical stability. On the other hand, in a case where the vinyl-based monomer having an acid group is used in an amount of not more than 10 parts by weight, it is possible to prevent a rapid increase of emulsion viscosity and a decrease in water resistance.

Further, a vinyl-based monomer having a hydroxy group can also be used as the (b2) used in the [step 2]. It is preferable to have a hydroxy group, because it is possible to enhance the dispersibility of a pigment, and possible to introduce a crosslinking point with isocyanate, melamine, or the like. Specific examples of the vinyl-based monomer having a hydroxy group include: 2-hydroxypropyl (meth)acrylate, 2-hydroxyethyl (meth)acrylate, 2-hydroxyethyl vinyl ether, and hydroxystyrene; ARONIX (registered trademark) 5700 manufactured by TOAGOSEI CO., LTD.; PLACCEL (registered trademark) FA-1, FA-4, FM-1, and FM-4 manufactured by Daicel Chemical Industries, Ltd.; HE-10, HE-20, HP-10, and HP-20 manufactured by NIPPON SHOKUBAI CO., LTD.; BLEMMER (registered trademark) PEP series, NKH-5050, and GLM manufactured by NOF Corporation; and hydroxy group-containing vinyl-based modified hydroxyalkyl vinyl-based monomers. One of these vinyl-based monomers each having a hydroxy group may be used solely. Alternatively, two or more may be used in combination.

The vinyl-based monomer having a hydroxy group is used in an amount of preferably 0.2 parts by weight to 50 parts by weight, more preferably 1 part by weight to 30 parts by weight, and even more preferably 2 parts by weight to 20 parts by weight, in a case where the total amount of the monomer mixtures for forming the vinyl chloride resin and the acrylic-containing resin is regarded as 100 parts by weight.

A vinyl-based monomer having a polyoxyalkylene chain can also be used as the (b2) used in the [step 2]. It is preferable to have a polyoxyalkylene chain, because the mechanical stability and chemical stability of the resin emulsion to be obtained are enhanced even in a case where the vinyl-based monomer having an acid group is not used.

Specific examples of the vinyl-based monomer having a polyoxyalkylene chain include: BLEMMER (registered trademark) PE-90, PE-200, PE-350, AE-90, AE-200, AE-350, PP-500, PP-800, PP-1000, AP-400, AP-550, AP-800, 700PEP-350B, 10PEP-550B, 55PET-400, 30PET-800, 55PET-800, 30PPT-800, 50PPT-800, 70PPT-800, PME-100, PME-200, PME-400, PME-1000, PME-4000, AME-400, 50POEP-800B, 50AOEP-800B, AEP, AET, APT, PLE, ALE, PSE, ASE, PKE, AKE, PNE, ANE, PNP, ANP, and PNEP-600 manufactured by NOF Corporation; Light Ester (registered trademark) 130MA, 041MA, and MTG, and Light Acrylate (registered trademark) EC-A, MTG-A, 130A, DPM-A, P-200A, NP-4EA, NP-8EA, and EHDG-A manufactured by Kyoeisha Chemical Co., Ltd.; MA-30, MA-50, MA-100, MA-150, RMA-1120, RMA-564, RMA-568, RMA-506, MPG130-MA, Antox MS-60, MPG-130MA, RMA-150M, RMA-300M, RMA-450M, RA-1020, RA-1120, and RA-1820 manufactured by Nippon Nyukazai Co., Ltd., and NK-ESTER M-20G, M-40G, M-90G, M-230G, AMP-10G, AMP-20G, AMP-60G, AM-90G, and LA manufactured by SHIN-NAKAMURA CHEMICAL Co., Ltd. One of these vinyl-based monomers each having a polyoxyalkylene chain may be used solely. Alternatively, two or more may be used in combination.

The vinyl-based monomer having a polyoxyalkylene chain is used in an amount of preferably 0.2 parts by weight to 10 parts by weight, more preferably 1 part by weight to 10 parts by weight, and even more preferably 2 parts by weight to 5 parts by weight, in a case where the total amount of the monomer mixtures for forming the vinyl chloride resin and the acrylic-containing resin is regarded as 100 parts by weight.

As the (b2) used in the [step 2], the (F) compound having at least two non-conjugated double bonds can be used. In this case, a structure is obtained in which crosslinking is present in the particles generated. As a result, the water resistance of a coating film formed is enhanced.

The (F) compound having at least two non-conjugated double bonds is used in an amount of preferably 0.1 parts by weight to 5 parts by weight, more preferably 0.5 parts by weight to 5 parts by weight, and even more preferably 1 part by weight to 3 parts by weight, in a case where the total amount of the monomer mixture for forming the acrylic-containing resin is regarded as 100 parts by weight.

By using a fluorine-containing vinyl-based monomer as the (b2) used in the [step 2], it is also possible to impart a high water repelling function and an high oil repelling function.

Specific examples of the fluorine-containing vinyl-based monomer include trifluoro (meth)acrylate, pentafluoro (meth)acrylate, perfluorocyclohexyl (meth)acrylate, 2,2,3,3-tetrafluoropropyl methacrylate, and β-(perfluorooctyl)ethyl (meth)acrylate. One of these fluorine-containing vinyl-based monomers may be used solely. Alternatively, two or more may be used in combination. The fluorine-containing vinyl-based monomer is used in an amount of preferably 0.1 parts by weight to 50 parts by weight, more preferably 1 part by weight to 40 parts by weight, and even more preferably 2 parts by weight to 30 parts by weight, in a case where the total amount of the monomer mixtures for forming the vinyl chloride resin and the acrylic-containing resin is regarded as 100 parts by weight.

By using, as the (b2) used in the [step 2], a monomer having an alkoxysilyl group, it is possible to impart crosslinkability, and possible to enhance adhesion to glass, metal, and the like.

Specific examples of the monomer having an alkoxysilyl group include vinyltrimethoxysilane, γ-(meth)acryloxypropyltrimethoxysilane, vinyltriethoxysilane, γ-(meth)acryloxypropyltriethoxysilane, γ-(meth)acryloxypropyltripropoxysilane, γ-(meth)acryloxypropyltributoxysilane, vinylmethyldimethoxysilane, γ-(meth)acryloxypropylmethyldimethoxysilane, vinylmethyldiethoxysilane, γ-(meth)acryloxypropylmethyldiethoxysilane, γ-(meth)acryloxypropylmethyldipropoxysilane, and γ-(meth)acryloxypropylmethyldibutoxysilane. One of these monomers each having an alkoxysilyl group may be used solely. Alternatively, two or more may be used in combination. The monomer having an alkoxysilyl group is used in an amount of preferably 0.1 parts by weight to 30 parts by weight, more preferably 0.5 parts by weight to 20 parts by weight, and even more preferably 1 part by weight to 10 parts by weight, in a case where the total amount of the monomer mixtures for forming the vinyl chloride resin and the acrylic-containing resin is regarded as 100 parts by weight.

By using, as the (b2) used in the [step 2], an ethylenically unsaturated monomer having a carbonyl group derived from a keto group or an aldehyde group, it is possible to enhance adhesion to a film. Specific examples of the ethylenically unsaturated monomer having a carbonyl group derived from a keto group or an aldehyde group include acrolein, diacetoneacrylamide, diacetonemethacrylamide, acetoacetoxyethyl methacrylate, formyl styrol, and vinyl alkyl ketones having 4 to 7 carbon atoms (e.g., vinyl methyl ketone, vinyl ethyl ketone, and vinyl butyl ketone). Among these, diacetoneacrylamide and diacetonemethacrylamide are particularly preferable, in terms of reactivity, availability, and economic efficiency. One of these ethylenically unsaturated monomers each having a carbonyl group derived from a keto group or an aldehyde group may be used solely. Alternatively, two or more may be used in combination.

The ethylenically unsaturated monomer having a carbonyl group derived from a keto group or an aldehyde group is used in an amount of preferably 0.1 parts by weight to 10 parts by weight and more preferably 1 part by weight to 5 parts by weight in a case where the total amount of the monomer mixture constituting the acrylic-containing resin is regarded as 100 parts by weight.

It is also possible to impart crosslinkability by, in the [step 2], obtaining the acrylic-containing resin with use of the ethylenically unsaturated monomer having a carbonyl group derived from a keto group or an aldehyde group as the (b2), compositing the acrylic-containing resin to a vinyl chloride resin, and then adding, to a resultant emulsion, (D) a hydrazine derivative having at least two hydrazino groups or at least two semicarbazide groups per molecule. This makes it possible to enhance the water resistance, solvent resistance, and adhesion of the coating film, an ink, and the like to be obtained.

Specific examples of the (D) hydrazine derivative having at least two hydrazino groups or at least two semicarbazide groups per molecule include: saturated aliphatic carboxylic acid dihydrazides having 2 to 18 carbon atoms, such as oxalic acid dihydrazide, malonic acid dihydrazide, glutaric acid dihydrazide, succinic acid dihydrazide, adipic acid dihydrazide, and sebacic acid dihydrazide; monoolefinically unsaturated dicarboxylic acid dihydrazides such as maleic acid dihydrazide, fumaric acid dihydrazide, and itaconic acid dihydrazide; phthalic acid dihydrazides, terephthalic acid dihydrazides, and isophthalic acid dihydrazides and dihydrazide, trihydrazide, and tetrahydrazide of pyromellitic acid; nitrilotriacetic acid trihydrazide, citric acid trihydrazide, 1,2,4-benzene trihydrazide, ethylenediaminetetraacetic acid tetrahydrazide, and 1,4,5,8-naphthoic acid tetrahydrazide; polyhydrazide obtained by reacting a lower polymer having a carboxylic acid lower alkyl ester group with hydrazine or a hydrazine hydrate (see Japanese Patent Publication, Tokukoushou, No. 52-22878); carbonic dihydrazide and bissemicarbazide; and (i) multifunctional semicarbazide obtained by excessively reacting a dihydrazine compound and/or any of the above-listed dihydrazides with diisocyanate, such as hexamethylene diisocyanate or isophorone diisocyanate, and a polyisocyanate compound derived therefrom, (ii) an aqueous multifunctional semicarbazide obtained by excessively reacting any of the above-listed dihydrazides with an isocyanate group in a reaction product of the polyisocyanate compound and an active hydrogen compound containing a hydrophilic group, such as polyether polyols and polyethylene glycol monoalkyl ethers, and (iii) a mixture of the multifunctional semicarbazide and the aqueous multifunctional semicarbazide (see Japanese Patent Application Publication, Tokukaihei, No. 8-151358 and Japanese Patent Application Publication, Tokukaihei, No. 8-245878). One of these (D) hydrazine derivatives each having at least two hydrazino groups or at least two semicarbazide groups per molecule may be used solely. Alternatively, two or more may be used in combination.

The (D) hydrazine derivative having hydrazino groups or semicarbazide groups is blended such that the total amount of a functional group selected from hydrazide groups, semicarbazide groups, and hydrazone groups is preferably 0.01 mol to 2 mol and more preferably 0.05 mol to 1.5 mol with respect to 1 mol of the carbonyl group in the acrylic-containing resin.

That is, it is more preferable that the vinyl chloride-acrylic composite resin emulsion have a carbonyl group derived from a keto group or an aldehyde group and further includes the (D) hydrazine derivative having at least two hydrazino groups or at least two semicarbazide groups per molecule.

On the other hand, in a case where the acrylic-containing resin in the [step 2] has excessively high hydrophilicity, the acrylic-containing resin concentrates in the vicinity of particle surfaces, and the interface between the acrylic-containing resin and the vinyl chloride resin becomes clear. As a result, it may become difficult to obtain a modification effect to be aimed, or the emulsion viscosity may be rapidly increased.

Thus, it is more desirable that not less than 60 parts by weight and more preferably not less than 80 parts by weight with respect to 100 parts by weight of all of the monomer mixture for forming the acrylic-containing resin be a hydrophobic monomer having a solubility of less than 5 g/L in water at 20°C, because it is possible to decrease the viscosity of the emulsion. In a case where the ratio of the hydrophobic monomer is not less than 60 parts by weight, the acrylic-containing resin does not concentrate in the vicinity of the particle surfaces. This causes the properties of the vinyl chloride resin to be easily exhibited, and makes it possible to decrease the emulsion viscosity. Therefore, productivity and economic efficiency are enhanced.

Note here that, in the present specification, a value shown in manufacturer's SDS is employed as the solubility of a monomer in water. The following shows the solubilities of main monomers in water (evaluation temperatures).

· Vinyl chloride: 8.8 g/L (25°C)
· Butyl methacrylate: 0.36 g/L (20°C)
· t-butyl methacrylate: 0.36 g/L (25°C)
· Methyl methacrylate: 15.3 g/L (20°C)
· Styrene: 0.32 g/L (25°C)
· Butyl acrylate: 1.7 g/L (20°C)
· 2-ethylhexyl acrylate: 0.025 g/L (30°C)
· Methacrylic acid: ∞
· Diacetoneacrylamide: not less than 100 g/100 g

Note, here, that the solubility in water decreases as a dissolution temperature decreases. Therefore, in a case where an evaluation temperature corresponding to the value shown in manufacturer's SDS is not lower than 20°C, the solubility at 20°C is considered to be equal to or lower than the value.

Further, the glass transition temperature (hereinafter, referred to as "Tg") of the acrylic-containing resin is preferably set to be lower than the Tg of the vinyl chloride resin, in order that impact resistance, plasticity, and film forming properties are enhanced.

Note here that the glass transition temperature (Tg) of a resin obtained by polymerizing a monomer mixture is calculated by the following Fox formula.

$$1/Tg = \Sigma(Wn/Tgn)/100$$

In the formula, Wn represents % by weight of a monomer n, and the Tgn represents the Tg (absolute temperature) of a homopolymer formed from the monomer n.

The following are the Tg values of main homopolymers.

· Vinyl chloride: 80°C
· Butyl methacrylate: 20°C
· t-butyl methacrylate: 107°C
· Methyl methacrylate: 105°C
· Styrene: 100°C
· Butyl acrylate: -54°C
· 2-ethylhexyl acrylate: -70°C
· Methacrylic acid: 144°C
· Diacetoneacrylamide: 77°C

A surfactant and a polymerization initiator used for the polymerization for the acrylic-containing resin in the [step 2] each can be one that is the same as any of those listed for the polymerization initiator for the vinyl chloride resin in the [step 1].

Similarly to the polymerization for the vinyl chloride resin in the [step 1], (G) a reactive surfactant having a polymerizable double bond in one molecule is preferably used as a part or all of the surfactant also in the [step 2], in terms of suppression of generation of new particles, the water resistance, and the weather resistance. In particular, in a case where a reactive surfactant having a polyoxyalkylene group in a molecule is used, it is possible to enhance the mechanical stability.

The polymerization initiator used in the [step 2] is particularly preferably a redox polymerization initiator in which an organic peroxide, a oxidation-reduction catalyst, and a reducing agent are combined, from the viewpoint of polymerization stability and water resistance.

In the vinyl chloride-acrylic composite resin, the weight ratio between the vinyl chloride resin and the acrylic-containing resin is preferably 95:5 to 20:80 and more preferably 70:30 to 30:70, from the viewpoint of adhesion, impact resistance, plasticity, and film forming properties.

The average particle diameter of the vinyl chloride-acrylic composite resin after completion of the [step 2] is preferably 20 nm to 500 nm, and more preferably 50 nm to 300 nm, as measured by dynamic light scattering. It is preferable that the average particle diameter of the composite resin particles be not less than 20 nm, because the viscosity can be low, and stability is enhanced. Further, it is preferable that the average particle diameter of the composite resin particles be not more than 500 nm, because good water resistance is exhibited. Furthermore, in a case where the vinyl chloride-acrylic composite resin emulsion is used, as it is, as an ink, the average particle diameter of the composite resin particles is adjusted more preferably to 60 nm to 120 nm. As a result, good adhesion, good water resistance, and good water whitening resistance are exhibited in particular, Note that the average particle diameter can be adjusted by the amount of the surfactant initially introduced in the [step 1].

The composite resin particles obtained by an embodiment of the present invention can be used as they are in the form of an emulsion or may be dried and used as a powder.

<Emulsion of resin obtained by polymerizing vinyl chloride monomer in presence of acrylic-containing resin>

The emulsion of a resin obtained by polymerization of a vinyl chloride monomer in the presence of an acrylic-containing resin is not particularly limited. Examples of such a resin emulsion include an emulsion of a vinyl chloride-acrylic composite resin which is obtained by, in multistage emulsion polymerization, (i) polymerizing a monomer(s) mainly composed of an acrylic monomer in a first stage and (ii) polymerizing a monomer(s) mainly composed of a vinyl chloride monomer in second and subsequent stages. It is possible to use, as the "monomer(s) mainly composed of an acrylic monomer" and the "monomer(s) mainly composed of a vinyl chloride monomer", monomers that are the same as those described in the above <Emulsion of resin obtained by polymerizing acrylic monomer in presence of vinyl chloride resin>. Further, it is possible to select and employ, as appropriate, a surfactant, a polymerization initiator, and/or the like which is/are used for emulsion polymerization.

The emulsion of a resin which is obtained by polymerizing a vinyl chloride monomer in the presence of an acrylic-containing resin is known in this field and a conventionally known resin emulsion can be used as appropriate. Suitable examples of such a resin emulsion include a resin emulsion disclosed in, for example, Japanese Patent No. 6247317.

<Emulsion of resin obtained by polymerizing vinyl chloride monomer in presence of styrene-(meth)acrylic acid ester oligomer and/or (meth)acrylic ester oligomer>

The emulsion of a resin obtained by polymerizing a vinyl chloride monomer in the presence of a styrene-(meth) acrylic acid ester oligomer and/or a (meth)acrylic ester oligomer is not particularly limited. Examples of such a resin emulsion include an emulsion of a vinyl chloride-acrylic composite resin obtained by polymerizing a monomer(s) mainly composed of a vinyl chloride monomer in a container in which a commercially available styrene-(meth)acrylic acid ester oligomer and/or a commercially available (meth)acrylic ester oligomer is/are introduced. It is possible to use, as the "monomer(s) mainly composed of a vinyl chloride monomer", a monomer(s) that is/are similar to those described in the above <Emulsion of resin obtained by polymerizing acrylic monomer in presence of vinyl chloride resin>. Further, it is possible to select and employ, as appropriate, a surfactant, a polymerization initiator, and/or the like which is/are used for emulsion polymerization.

The emulsion of a resin obtained by polymerizing a vinyl chloride monomer in the presence of a styrene-(meth) acrylic acid ester oligomer and/or a (meth)acrylic ester oligomer is well known in this field, and a conventionally known resin emulsion can be used as appropriate. Suitable examples of such a resin emulsion include a resin emulsion disclosed in, for example, International Publication No. WO 2010-140647.

[1-1-1-2. Vinyl chloride resin emulsion]

The above-described vinyl chloride resin emulsion is not particularly limited. Examples of the vinyl chloride resin emulsion include an emulsion of a vinyl chloride resin which is obtained by polymerizing, in emulsion polymerization, a monomer(s) mainly composed of a vinyl chloride monomer.

It is possible to use, as the "monomer(s) mainly composed of a vinyl chloride monomer", a monomer(s) that is/are the same as those described in the above <Emulsion of resin obtained by polymerizing acrylic monomer in presence of vinyl chloride resin>. Further, it is possible to select and employ, as appropriate, a surfactant, a polymerization initiator, and/or the like which is/are used for emulsion polymerization.

[1-1-1-3. Vinyl chloride-acrylic copolymer emulsion]

A vinyl chloride-acrylic copolymer emulsion is not particularly limited. Examples of the vinyl chloride-acrylic copolymer emulsion include an emulsion of a vinyl chloride-acrylic copolymer obtained by copolymerizing, in emulsion polymerization, a monomer that is mainly composed of a vinyl chloride monomer and a monomer that is mainly composed of an acrylic monomer. It is possible to use, as the "monomer(s) mainly composed of an acrylic monomer" and the "monomer(s) mainly composed of a vinyl chloride monomer", monomers that are the same as those described in the above <Emulsion of resin obtained by polymerizing acrylic monomer in presence of vinyl chloride resin>. Further, it is possible to select and employ, as appropriate, a surfactant, a polymerization initiator, and/or the like which is/are used for emulsion polymerization.

The vinyl chloride-acrylic copolymer emulsion which is well known in this field and a conventionally known resin emulsion can be used as appropriate. Suitable examples of such a resin emulsion include a resin emulsion disclosed in, for example, Japanese Patent Application Publication, Tokukaihei, No. 10-176132.

[1-1-2. Acrylic resin emulsion]

The above-described acrylic resin emulsion is not particularly limited. Examples of the acrylic resin emulsion include an emulsion of an acrylic resin which is obtained by polymerizing, in emulsion polymerization, a monomer(s) mainly composed of an acrylic monomer(s). Note here that the acrylic resin is a resin which is obtained by polymerizing monomers that do not contain a vinyl chloride monomer or that contain, if any, a slight amount of a vinyl chloride monomer (not more than 10 parts of the vinyl chloride monomer in a case where the total amount of the monomer mixture is regarded as 100 parts by weight).

It is possible to use, as the "monomer(s) mainly composed of an acrylic monomer", a monomer(s) that is/are the same as those described in the above <Emulsion of resin obtained by polymerizing acrylic monomer in presence of vinyl chloride resin>. Further, with regard to a method of emulsion polymerization and the surfactant, the polymerization initiator, and/or the like which are to be used, it is possible to select and employ, as appropriate, the method described in the [step 2] in the above <Emulsion of resin obtained by polymerizing acrylic monomer in presence of vinyl chloride resin> and the surfactant and/or the polymerization initiator used in the method. Therefore, the emulsion polymerization may be carried out in one stage or may be alternatively carried out over a plurality of times. In the latter case, the composition of the monomer mixture is changed while the emulsion polymerization is carried out over the plurality of times.

The acrylic resin emulsion is well known in this field and a conventionally known resin emulsion can be used as appropriate. Suitable examples of such a resin emulsion include resin emulsions disclosed in, for example, Japanese Patent Application Publication, Tokukai, No. 2006-070236 and International Publication No. WO 2018-088560.

Those acrylic resin emulsions can be emulsions that are commercially available from companies. Examples of such acrylic resin emulsions include: VONCOAT (registered trademark) and WATERSOL (registered trademark) manufactured by DIC Corporation; ACRYSET (registered trademark) and UWR (registered trademark) manufactured by NIPPON SHOKUBAI CO., LTD.; Polysol (registered trademark) manufactured by Showa Denko K.K.; YODOSOL (registered trademark) and KANEBINOL (registered trademark) manufactured by Henkel Japan; POLYTLON (registered trademark) and POLYDUREX (registered trademark) manufactured by Asahi Kasei Chemicals Corp.; RIKA BOND (registered trademark) and MOWINYL manufactured by Japan Coating Resin Corporation; KANEKA GEMLAC (registered trademark) manufactured by KANEKA CORPORATION; PRIMAL (registered trademark) manufactured by Dow Chemical Company; Acronal (registered trademark) and JONCRYL (registered trademark) manufactured by BASF; and NeoCryl (registered trademark) and Bayhydrol (registered trademark) manufactured by Covestro AG.

In the description of the vinyl chloride-acrylic composite resin emulsion, it has been described that more preferably, the ethylenically unsaturated monomer having a carbonyl group derived from a keto group or an aldehyde group is used and, further, the (D) hydrazine derivative having at least two hydrazino groups or at least two semicarbazide groups per molecule is contained. For the same reason, more preferably, the other (A) component also uses the ethylenically unsaturated monomer having a carbonyl group derived from a keto group or an aldehyde group and further includes the (D) hydrazine derivative having at least two hydrazino groups or at least two semicarbazide groups per molecule.

The vinyl chloride-based resin emulsion is more preferably a vinyl chloride-acrylic composite resin emulsion among others, from the viewpoint of the balance between film forming properties and coating hardness. Further, the vinyl chloride-based resin emulsion is even more preferably an emulsion of a composite resin which is obtained by polymerizing an acrylic monomer(s) in the presence of the vinyl chloride resin.

[1-2. (B) component]

The aqueous ink composition in accordance with an embodiment of the present invention may contain, as the (B) component, a polyolefin-based resin emulsion.

The polyolefin-based resin emulsion is an emulsion of a polyolefin-based resin. The polyolefin-based resin is not particularly limited. Examples of the polyolefin-based resin include polypropylene, an ethylene-propylene copolymer, and an ethylene-propylene-butene copolymer.

The polyolefin-based resin may be subjected to a modification treatment selected from the group consisting of chlorination modification, acrylic modification, and maleic anhydride modification. The polyolefin-based resin is more preferably a polyolefin-based resin emulsion which has undergone chlorination modification, and particularly preferably a chlorinated polypropylene resin emulsion.

The polyolefin-based resin emulsion is well known in this field and a conventionally known resin emulsion can be used as appropriate. Suitable examples of such a resin emulsion include resin emulsions disclosed in, for example, Japanese Patent Application Publication, Tokukai, No. 2013-193324 and Japanese Patent Application Publication, Tokukaihei, No. 10-298233.

The polyolefin-based resin can be a commercially available product placed on the market. Examples of the commercially available product include: SUPERCHLON (registered trademark) series (SUPERCHLON (registered trademark) E-415, E-480T, and E-604 (maleic anhydride modification/chlorination modification), SUPERCHLON E-723 (chlorination modification), and the like) manufactured by Nippon Paper Industries Co., Ltd.; AUROREN (registered trademark) series (non-chlorine-based polyolefin, AUROREN (registered trademark) AE-301 and AE-202 (maleic anhydride/acrylic modification), AUROREN S-6375 (maleic anhydride/acrylic modification), and the like) manufactured by Nippon Paper Industries Co., Ltd., HARDLEN (registered trademark) EH-801J, EW-5515, EW-5303, and EW-5250 (maleic anhydride modification/chlorination modification), NA-1015, NA-1100, NA-4002, NA-3002, NZ-1001, NZ-1004, NZ-1015, and NZ-1029 (maleic anhydride modification), and the like which are manufactured by TOYOBO Co., Ltd., and ZAIKTHENE (registered trademark) series (ZAIKTHENE (registered trademark) L, A, NC, and N (acrylic modification), and the like) manufactured by Sumitomo Seika Chemicals Co., Ltd.

[1-3. (C) component]

The aqueous ink composition in accordance with an embodiment of the present invention may include, as the (C) component, an alkali-soluble resin.

Note, here, that the "alkali-soluble resin" refers to a resin that is, as it is, insoluble in water but is dissolved in water in a case where this resin is placed in an alkali condition. Note that "being insoluble in water" herein is intended to mean that when added to water at 25°C and at a pH of not more than 7, turbidity or sedimentation occurs. Note also that "being placed in an alkali condition" is intended to mean that the pH is more than 7.

Examples of the alkali-soluble resin include a copolymer resin which is obtained by copolymerizing an ethylenically unsaturated carboxylic acid and an unsaturated monomer that is copolymerizable with the ethylenically unsaturated carboxylic acid. Specific examples of the alkali-soluble resin include a styrene-(meth)acrylic acid copolymer, a styrene-$\alpha$ methylstyrene-(meth)acrylic acid copolymer, a styrene-(meth)acrylic acid ester-(meth)acrylic acid copolymer, a styrene-maleic anhydride copolymer, a vinyl naphthalene-(meth)acrylic acid copolymer, a vinyl naphthalene-maleic acid copolymer, an isobutylene-maleic anhydride copolymer, a (meth)acrylic acid ester-(meth)acrylic acid copolymer, and an acrylic acid ester-methacrylic acid ester-(meth)acrylic acid copolymer.

Examples of the ethylenically unsaturated carboxylic acid include acrylic acid, methacrylic acid, crotonic acid, itaconic acid, maleic acid, fumaric acid, 2-carboxyethyl(meth)acrylate, 2-carboxypropyl(meth)acrylate, maleic anhydride, maleic acid monoalkyl ester, citraconic acid, citraconic anhydride, and citraconic acid monoalkyl ester. One of these ethylenically unsaturated carboxylic acids may be used solely. Alternatively, two or more may be used in combination. Among these, the ethylenically unsaturated carboxylic acid is more preferably acrylic acid, methacrylic acid, maleic acid, or itaconic acid.

Note that though the above (A) component can also include an emulsion of the resin which is obtained by polymerizing a monomer mixture containing the ethylenically unsaturated carboxylic acid described above, such a resin is not dissolved in water under the alkali condition. In this regard, the resin differs from the alkali-soluble resin that is the (C) component.

The ethylenically unsaturated carboxylic acid is used in an amount of preferably 5 parts by weight to 60 parts by weight, more preferably 7 parts by weight to 50 parts by weight, even more preferably 10 parts by weight to 40 parts by weight, and particularly preferably 12 parts by weight to 30 parts by weight, in a case where the total amount of the monomer mixture for forming the alkali-soluble resin is regarded as 100 parts by weight. It is preferable that the ethylenically unsaturated carboxylic acid be used in an amount of not less than 5 parts by weight, because the alkali-soluble resin is dissolved in water under the alkali condition. It is also preferable that the amount of the ethylenically unsaturated carboxylic acid used be not more than 60 parts by weight, from the viewpoint of the stability of the emulsion containing the alkali-soluble resin and the water resistance of the ink applied. In a case where the amount of the ethylenically unsaturated carboxylic acid used is more than 60 parts by weight, the viscosity of the emulsion increases after the alkali-soluble resin is solubilized.

The unsaturated monomer is not particularly limited as long as being an unsaturated monomer that is copolymerizable with the ethylenically unsaturated carboxylic acid. Examples of such an unsaturated monomer include: alkyl esters of an acrylic acid or a methacrylic acid which have 1 to 18 carbon atoms (e.g., methyl (meth)acrylate, ethyl (meth)acrylate, n-butyl (meth)acrylate, 2-ethylhexyl (meth)acrylate, lauryl (meth)acrylate, cyclohexyl (meth)acrylate, and t-butyl (meth)acrylate); vinyl aromatics (e.g., styrene, 4-methylstyrene, and $\alpha$-methylstyrene); vinyl aromatics (e.g., styrene, 4-methylstyrene, and $\alpha$-methylstyrene); saturated carboxylic acid vinyl esters (e.g., vinyl acetate, and vinyl propionate); monoolefinically unsaturated carboxylic acid amide (e.g., acrylamide, and methacrylamide); N-alkyl and/or N-alkylol derivatives of monoolefinically unsaturated carboxylic acid amide (e.g., N-methyl acrylamide, N-methylol acrylamide, and N-methylol acrylamide); ethylenically unsaturated monomers having a carbonyl group derived from a keto group or an aldehyde group (e.g., acrolein, diacetoneacrylamide, diacetonemethacrylamide, acetoacetoxyethyl methacrylate, formyl styrol, and vinyl alkyl ketones having 4 to 7 carbon atoms (e.g., vinyl methyl ketone, vinyl ethyl ketone, and vinyl butyl ketone)); monoolefinically unsaturated sulfonic acids (e.g., vinyl sulfonic acid, methyl acrylamide propane sulfonic acid) and salts thereof; adducts of polyethylene glycol and methacrylic acid (BLEMMER PE series (product name), manufactured by NOF Corporation); adducts of polypropylene glycol and methacrylic acid (BLEMMER PP series (product name), manufactured by NOF Corporation); diolefinically unsaturated monomers (e.g., 1.4-diacryloxy butane and divinylbenzene); acrylonitrile; hydroxyethyl acrylate; hydroxyethyl methacrylate; hydroxypropyl acrylate; hydroxypropyl methacrylate; glycidyl methacrylate; vinylidene chloride; vinyl chloride; butadiene; and the like. One of these unsaturated monomers may be used solely. Alternatively, two or more may be used in combination.

By using, as the unsaturated monomer(s), the ethylenically unsaturated monomer having a carbonyl group derived from a keto group or an aldehyde group, it is possible to enhance adhesion to a film. Among the above ethylenically unsaturated monomers having a carbonyl group derived from a keto group or an aldehyde group, diacetoneacrylamide and diacetonemethacrylamide are particularly preferable, in terms of reactivity, availability, and economic efficiency.

The ethylenically unsaturated monomer having a carbonyl group derived from a keto group or an aldehyde group is used in an amount of preferably 0.1 parts by weight to 10 parts by weight and more preferably 1 part by weight to 5 parts by weight in a case where the total amount of the monomer mixture constituting the alkali-soluble resin is regarded as 100 parts by weight.

It is also possible to impart crosslinkability by (i) obtaining the alkali-soluble resin with use of the ethylenically unsaturated monomer having a carbonyl group derived from a keto group or an aldehyde group as the unsaturated monomer, and (ii) including the (D) hydrazine derivative having at least two hydrazino groups or at least two semicarbazide groups per molecule in a solution in which the alkali-soluble resin obtained is neutralized with alkali and water-solubilized or in an emulsion of the alkali-soluble resin in a case where the alkali-soluble resin is prepared by emulsion polymerization. This makes it possible to improve water resistance, solvent resistance and adhesion of a resultant coating film, ink, and the like.

Specific examples of the (D) hydrazine derivative having at least two hydrazino groups or at least two semicarbazide groups per molecule are as described in the (A) component, and thus, an explanation thereof is omitted here.

The (D) hydrazine derivative having hydrazino groups or semicarbazide groups is blended such that the total amount of a functional group selected from hydrazide groups, semicarbazide groups, and hydrazone groups is preferably 0.01 mol to 2 mol and more preferably 0.05 mol to 1.5 mol with respect to 1 mol of the carbonyl group in the alkali-soluble resin.

That is, it is more preferable that the alkali-soluble resin have a carbonyl group derived from a keto group or an aldehyde group and further includes the (D) hydrazine derivative having at least two hydrazino groups or at least two semicarbazide groups per molecule.

The weight average molecular weight of the alkali-soluble resin is preferably 1,000 to 60,000, more preferably 1,500 to 30,000, and even more preferably 2,000 to 25,000, although not limited thereto. It is preferable that the weight average molecular weight of the alkali-soluble resin be not less than 1,000, because dispersion stability of pigment and abrasion resistance of a resultant applied product become excellent. It is also preferable that the alkali-soluble resin have a weight average molecular weight of not more than 60,000, because such an alkali-soluble resin has excellent handleability without a significant increase in viscosity.

Note here that the weight average molecular weight is a weight average molecular weight which is polystyrene equivalent and which is measured by gel permeation chromatography (GPC).

It is preferable that Tg of the alkali-soluble resin be not less than 50°C, in terms of a coating hardness.

In a case where the alkali-soluble resin is produced by emulsion polymerization, the particle diameter of the alkali-soluble resin need not be particularly considered since the alkali-soluble resin is neutralized and water-solubilized. However, in a case where the particle diameter is excessively small, the viscosity of the emulsion in the polymerization is increased, and productivity is deteriorated. In this viewpoint, the particle diameter is preferably more than 150 nm.

The alkali-soluble resin is prepared by a method that is not particularly limited, and can be prepared by bulk polymerization, solution polymerization, emulsion polymerization, or the like. Among these, emulsion polymerization is optimal, since in the emulsion polymerization, steps of drying, powdering, removing a solvent, re-dissolving, and the like are not needed and steps from polymerization to neutralization/water-solubilization can be carried out continuously.

Examples of a method for producing an emulsion of the alkali-soluble resin include a method in which an unsaturated monomer mixture constituted by 5 parts by weight to 60 parts by weight of the ethylenically unsaturated carboxylic acid and 40 parts by weight to 95 parts by weight of an unsaturated monomer that is copolymerizable with the ethylenically unsaturated carboxylic acid is subjected to emulsion polymerization in water in the presence of a surfactant and a chain transfer agent. It is possible to use, as the surfactant, one that is the same as any of those listed in the description of the (A) component can be used.

Examples of the chain transfer agent include: mercaptans such as t-dodecylmercaptan and n-dodecylmercaptan; thioglycolic acid esters such as methyl thioglycolate, propyl thioglycolate, and 2-ethylhexyl thioglycolate; β-mercapto propionic acid esters such as methyl β-mercaptopropionate and octyl β-mercaptopropionate; and α-methylstyrene dimer.

It is possible to use, as the polymerization initiator used in the emulsion polymerization, one that is the same as any of those listed in the description of the (A) component.

The alkali-soluble resin can be a commercially available product placed on the market. Examples of the commercially available product include: NeoCryl (registered trademark) B-817 (Tg: 64°C, Mw: 23,000), and NeoCryl (registered trademark) B-890 (Tg: 85°C, Mw: 12,500) which are manufactured by Covestro AG in Germany; and JONCRYL (registered trademark) 67 (Tg: 73°C, Mw: 12,500), JONCRYL (registered trademark) 678 (Tg: 85°C, Mw: 8,500), JONCRYL (registered trademark) 690 (Tg: 102°C, Mw: 16,500), JONCRYL (registered trademark) 682 (Tg: 56°C, Mw: 1,700), JONCRYL (registered trademark) 693 (Tg: 84°C, Mw: 6,000), JONCRYL (registered trademark) 819 (Tg: 57°C, Mw: 14,500), JONCRYL (registered trademark) JDX-C3000A (Tg: 65°C, Mw: 10,000), JONCRYL (registered trademark) JDX-C3080 (Tg: 134°C, Mw: 14,000), JONCRYL (registered trademark) HPD-196 (Tg: 85°C, Mw: 9,200), JONCRYL (registered trademark) HPD-96J (Tg: 102°C, Mw: 16,500), JONCRYL (registered trademark) 6610 (Tg: 85°C, Mw: 8,500), and JONCRYL (registered trademark) JDX-6500 (Tg: 65°C, Mw: 10,000) which are manufactured by BASF in Germany.

[1-4. Aqueous ink composition]

The aqueous ink composition in accordance with an embodiment of the present invention may include: the (A) component and the (B) component; the (A) component and the (C) component; or the (A) component, the (B) component, and the (C) component.

The aqueous ink composition in accordance with an embodiment of the present invention has, by including the (A) component and the (B), component enhanced adhesion to a polyolefin base material. In this case, respective mixing ratios of the (A) component and the (B) component is, for example, (A) 50% by weight to 95% by weight and (B) 5% by weight to 50% by weight, and more preferably (A) 60% by weight to 90% by weight and (B) 10% by weight to 40% by weight, but the mixing ratios are not limited thereto.

The aqueous ink composition in accordance with an embodiment of the present invention has, by including the (A) component and the (C) component, enhanced adhesion to a polyamide base material. In such a case, respective mixing ratios of the (A) component and the (B) component is, for example, (A) 50% by weight to 95% by weight and (C) 5% by weight to 50% by weight, and more preferably (A) 60% by weight to 90% by weight and (C) 10% by weight to 40% by weight, but the mixing ratios are not limited thereto..

Among others, the aqueous ink composition in accordance with an embodiment of the present invention has excellent adhesion to a polyolefin base material, a polyester base material, and a polyamide base material, by including the (A) component, the (B) component, and the (C) component. In such a case, respective mixing ratios of the (A) component, the (B) component, and the (C) component is, for example: (A) 20% by weight to 90% by weight, (B) 5% by weight to 40% by weight, and (C) 5% by weight to 40% by weight; more preferably (A) 35% by weight to 85% by weight, (B) 5% by weight to 30% by weight, and (C) 10% by weight to 35% by weight; and even more preferably (A) 45% by weight to 85% by weight, (B) 5% by weight to 25% by weight, and (C) 10% by weight to 30% by weight. However, the mixing ratios are not limited to the above ratios.

The aqueous ink composition in accordance with an embodiment of the present invention, preferably, further includes (E) a pigment.

The pigment is not particularly limited. Examples of the pigment include carbon black, phthalocyanine blue, quinacridone red, monoazo yellow, monoazo red, disazo orange, quinacridone magenta, dioxazine violet, phthalocyanine green, benzimidazolone, bismuth vanadium, naphthol red, titanium dioxide, calcium carbonate, kaolin clay, talc, barium sulfate, white carbon, Bengal red, yellow ocher, and complex oxide.

Further, it is also possible to use a self-dispersing pigment, stable dispersion of which is made possible by chemically treating the surface of these pigments and adding a hydrophilic functional group to the surface.

These pigments may be dispersed during ink production. However, a commercially available pigment dispersion which has been dispersed in water in advance can also be used.

In general, in a case where an aqueous ink composition is applied to a base material, the aqueous ink composition is applied after a primer, which is an undercoating paint, is applied to the base material so that adhesion will be enhanced. However, according to the aqueous ink composition in accordance with an embodiment of the present invention, sufficient adhesion can be achieved without application of the primer. That is, the aqueous ink composition in accordance with an embodiment of the present invention does not require a primer.

[1-5. Printed product]

An aspect of the present invention also includes a printed product which is obtained by using the aqueous ink composition in accordance with an embodiment of the present invention. The printed product in accordance with an embodiment of the present invention is obtained by printing (applying) the aqueous ink composition on a base material.

The base material is not particularly limited. Examples of the base material include absorbent base materials such as paper and poorly-absorbent base materials such as resin. In particular, the aqueous ink composition in accordance with an embodiment of the present invention has excellent adhesion with respect to at least one film base material selected from the group consisting of a polyolefin base material, a polyester base material, and a polyamide base material. Therefore, the aqueous ink composition in accordance with an embodiment of the present invention can be suitably used for these base materials.

Examples of a method of applying the aqueous ink composition to a base material include, but are not limited to, letterpress printing, flexo printing, gravure printing, screen printing, and inkjet printing. The aqueous ink composition is applied as, for example, flexo ink, gravure ink, screen ink, or inkjet ink. The aqueous ink composition in accordance with an embodiment of the present invention can be suitably used, in particular, for flexo ink, gravure ink, and inkjet ink.

(2. Method for producing aqueous ink composition)

A method for producing an aqueous ink composition in accordance with an embodiment of the present invention is not particularly limited provided that the method is for producing an aqueous ink composition that contains: (A) a vinyl chloride-based resin emulsion and/or an acrylic resin emulsion; and at least one selected from the group consisting of (B) a polyolefin-based resin emulsion and (C) an alkali-soluble resin. It is possible to employ, as appropriate, a general method for producing an aqueous ink. The method for producing the aqueous ink composition in accordance with an embodiment of the present invention includes, for example, the step of mixing: (A) a vinyl chloride-based resin emulsion and/or an acrylic resin emulsion; and at least one selected from the group consisting of (B) a polyolefin-based resin emulsion and (C) an alkali-soluble resin.

The method for producing the aqueous ink composition in accordance with an embodiment of the present invention may include the step of producing the (A) vinyl chloride-based resin emulsion by carrying out the following steps 1 and 2. The following steps 1 and 2 are as described in [1. Aqueous ink composition].

[Step 1]

A step of obtaining a vinyl chloride resin by carrying out emulsion polymerization of a monomer mixture constituted by more than 90 parts by weight and not more than 100 parts of (a1) a vinyl chloride monomer and not less than 0 parts by weight and less than 10 parts by weight of (a2) an ethylenically unsaturated monomer that is copolymerizable with the vinyl chloride monomer (wherein a total amount of (a1) and (a2) is 100 parts by weight).

[Step 2]

A step of obtaining an acrylic-containing resin by carrying out, in the presence of the vinyl chloride resin, emulsion polymerization of a monomer mixture constituted by 50 parts by weight to 100 parts by weight of (b1) (meth)acrylic acid alkyl ester and 0 parts by weight to 50 parts by weight of (b2) an ethylenically unsaturated monomer that is copolymerizable with the (meth)acrylic acid alkyl ester (wherein a total amount of (b1) and (b2) is 100 parts by weight).

For example, the aqueous ink composition can be produced by: using an emulsion prepared by emulsion polymerization as it is; mixing, with deionized water, a solvent, a surfactant, a pigment dispersion, and/or the like, the (A) component, the (B) component, and the (C) component so that the total solid content of the (A) component, the (B) component, and the (C) component becomes a desired amount; and stirring a resultant mixture.

In addition to the deionized water, the solvent, the surfactant, the pigment dispersion, and/or the like, it is possible to also add an additive used in a coating material such as a film foaming aid, colloidal silica, a plasticizer, a dispersion agent, a wetting agent, a preservative, an antifreezing agent, a photo stabilizer, an ultraviolet absorber, a defoaming agent, and a silane coupling agent.

In the above configuration, the aqueous ink composition in accordance with an embodiment of the present invention can decrease the use of an organic solvent and decrease load on environment. This advantageous effect contributes to the achievement of, for example, Goal 6 "Ensure availability and sustainable management of water and sanitation for all" of the Sustainable Development Goals (SDGs) proposed by the United Nations.

Aspects of the present invention can also be expressed as follows.

Embodiments of the present invention include the following.

<1> An aqueous ink composition, containing: (A) a vinyl chloride-based resin emulsion and/or an acrylic resin emulsion; and at least one selected from the group consisting of (B) a polyolefin-based resin emulsion and (C) an alkali-soluble resin.

<2> The aqueous ink composition according to <1>, containing all of the (A), the (B) and the (C) such that respective mixing ratios of the (A), the (B), and the (C) are (A) 20% by weight to 90% by weight, (B) 5% by weight to 40% by weight, and (C) 5% by weight to 40% by weight.

<3> The aqueous ink composition according to <1> or <2>, wherein the (A) has a carbonyl group derived from a keto group or an aldehyde group and further includes (D) a hydrazine derivative having at least two hydrazino groups or at least two semicarbazide groups per molecule.

<4> The aqueous ink composition according to any one of <1> to <3>, wherein the (C) has a carbonyl group derived from a keto group or an aldehyde group and further includes (D) a hydrazine derivative having at least two hydrazino groups or at least two semicarbazide groups per molecule.

<5> The aqueous ink composition according to any one of <1> to <4>, wherein the (B) is a chlorinated polypropylene resin emulsion.

<6> The aqueous ink composition according to any one of <1> to <5>, further including (E) a pigment.

<7> The aqueous ink composition according to any one of <1> to <6>, wherein the (A) vinyl chloride-based resin emulsion is an emulsion of a composite resin which is obtained by carrying out the following [step 1] and [step 2]:

[Step 1]
a step of obtaining a vinyl chloride resin by carrying out emulsion polymerization of a monomer mixture constituted by more than 90 parts by weight and not more than 100 parts of (a1) a vinyl chloride monomer and not less than 0 parts by weight and less than 10 parts by weight of (a2) an ethylenically unsaturated monomer that is copolymerizable with the vinyl chloride monomer (wherein a total amount of (a1) and (a2) is 100 parts by weight); and

[Step 2]
a step of obtaining an acrylic-containing resin by carrying out, in the presence of the vinyl chloride resin, emulsion polymerization of a monomer mixture constituted by 50 parts by weight to 100 parts by weight of (b1) (meth)acrylic acid alkyl ester and 0 parts by weight to 50 parts by weight of (b2) an ethylenically unsaturated monomer that is copolymerizable with the (meth)acrylic acid alkyl ester (wherein a total amount of (b1) and (b2) is 100 parts by weight).

<8> The aqueous ink composition according to any one of <1> to <7>, wherein the (C) is obtained by emulsion polymerization.

<9> A printed product obtained by printing, on a base material, the aqueous ink composition described in any one of <1> to <8>.

<10> A method for producing an aqueous ink composition containing (A) a vinyl chloride-based resin emulsion and/or an acrylic resin emulsion and at least one selected from the group consisting of (B) a polyolefin-based resin emulsion and (C) an alkali-soluble resin, the method including the step of mixing (A) the vinyl chloride-based resin emulsion and/or an acrylic resin emulsion and the at least one selected from the group consisting of (B) the polyolefin-based resin emulsion and (C) the alkali-soluble resin.

<11> The method according to <10>, further including the step of producing the (A) vinyl chloride-based resin emulsion by carrying out the following steps 1 and 2:

[Step 1]
a step of obtaining a vinyl chloride resin by carrying out emulsion polymerization of a monomer mixture constituted by more than 90 parts by weight and not more than 100 parts of (a1) a vinyl chloride monomer and not less than 0 parts by weight and less than 10 parts by weight of (a2) an ethylenically unsaturated monomer that is copolymerizable with the vinyl chloride monomer (wherein a total amount of (a1) and (a2) is 100 parts by weight); and

[Step 2]
a step of obtaining an acrylic-containing resin by carrying out, in the presence of the vinyl chloride resin, emulsion polymerization of a monomer mixture constituted by 50 parts by weight to 100 parts by weight of (b1) (meth)acrylic acid alkyl ester and 0 parts by weight to 50 parts by weight of (b2) an ethylenically unsaturated monomer that is copolymerizable with the (meth)acrylic acid alkyl ester (wherein a total amount of (b1) and (b2) is 100 parts by weight).

<12> The method according to <10> or <11>, containing all of the (A), the (B) and the (C) such that respective mixing ratios of the (A), the (B), and the (C) are (A) 20% by weight to 90% by weight, (B) 5% by weight to 40% by weight, and (C) 5% by weight to 40% by weight.

<13> The method according to any one of <10> to <12>, wherein the (A) has a carbonyl group derived from a keto group or an aldehyde group and further includes (D) a hydrazine derivative having at least two hydrazino groups or at least two semicarbazide groups per molecule.

<14> The method according to any one of <10> to <13>, wherein the (C) has a carbonyl group derived from a keto group or an aldehyde group and further includes (D) a hydrazine derivative having at least two hydrazino groups or at least two semicarbazide groups per molecule.

<15> The method according to any one of <10> to <14>, wherein the (B) is a chlorinated polypropylene resin emulsion.

<16> The method according to any one of <10> to <15>, wherein the aqueous ink composition further includes (E) a pigment.

Examples

The following description will discuss an embodiment of the present invention in more detail with reference to Examples and Comparative Examples. Note that the present invention is not limited to these examples.

The following describes a method for measuring properties of a vinyl chloride-based resin emulsion, an acrylic resin emulsion, and an emulsion of an alkali-soluble resin, which was used in of Examples and Comparative Examples, and a method for producing an aqueous ink composition which was obtained in each of Examples and Comparative Examples and a method for evaluating the aqueous ink composition. Note that "parts" and "%" are on the basis of weight (parts by weight and % by weight) unless otherwise noted.

[Method for measuring properties of vinyl chloride-based resin emulsion, acrylic resin emulsion, and emulsion of alkali-soluble resin]

(Particle size distribution and average particle diameter)

The particle size distribution and the average particle diameter of resin particles contained in the emulsion were measured with use of a particle size distribution measurement device (manufactured by MicrotracBEL Corp., "Nanotrac Wave-EX 150") that employed dynamic light scattering. In measurement, the emulsion was diluted and adjusted to a concentration at which a loading index in sample loading became approximately 1. The particle size distribution and the average particle diameter were then measured on the basis of volume.

(Viscosity)

With use of a BM-type viscometer, the viscosity of the emulsion was measured at a liquid temperature of 25°C and with 60 rotations.

(Minimum film forming temperature)

The minimum film forming temperature (hereinafter, which may be also referred to as "MFT") of the emulsion was measured with use of a TP-801LT MFT tester manufactured by Tester Sangyo Co., Ltd.

(THF-insoluble content)

The emulsion was thinly spread in a polyethylene container, and dried in a dryer at 60°C for 16 hours to obtain a solid product. The solid product obtained was put into a bag prepared with use of a 200-mesh metal gauze whose weight (W1) was measured in advance, and the total weight (W2) of the solid product and the bag was measured. Thereafter, the bag containing the solid product was immersed in tetrahydrofuran (THF) at room temperature for 16 hours. The bag was taken out from the THF, dried in a dryer at 120°C for 1 hour, and allowed to cool to room temperature in a desiccator. Thereafter, a weight (W3) was measured.

The THF-insoluble content of the emulsion was calculated by the following formula.

$$\texttt{THF-insoluble content (\%) = (W3 - W1)/(W2 - W1)} \times \texttt{100}$$

(Solid content concentration)

A certain amount of the emulsion was poured into an aluminum container whose weight (w1) was measured in advance, and then a weight (w2) was measured. Thereafter, the emulsion was dried in a dryer at 120°C for 1 hour. The weight (w3) of the aluminum container containing a solid content after the drying was measured. A solid content concentration of the emulsion was calculated by the following formula.

$$\text{Solid content concentration (\%)} = (w3 - w1)/(w2 - w1) \times 100$$

(Weight average molecular weight)

Note here that the weight average molecular weight of an alkali-soluble resin is polystyrene-equivalent weight average molecular weight which is measured by gel permeation chromatography (GPC).

[Method for producing aqueous ink composition]

Aqueous ink compositions were produced with use of components shown in Tables 4 to 8 by: making adjustment by adding deionized water so that a total solid content of an (A) component, a (B) component, and a (C) component would be 7 parts in 100 parts of an aqueous ink composition which was to be ultimately obtained; subsequently, mixing a solvent, a surfactant, and a pigment dispersion shown in Table 1 in respective mixing parts indicated in Table 1; and stirring a resultant mixture with use of a magnetic stirrer for 15 minutes.

[Table 1]

| Component | Product name | Manufacturer | Blend for evaluation (parts) | Note |
|---|---|---|---|---|
| Adjustment water | Ion-exchanged water | | 36.8 | including that brought by emulsion and aqueous alkali-soluble resin solution |
| Resin | (A) + (B) + (C) | | 7.0 | as solid content |
| Solvent | 1,3-propanediol | reagent | 7.5 | |
| | Propyleneglycol monomethyl ether | reagent | 22.5 | |
| Surfactant | SURFYNOL 440 | EVONIK | 1.0 | acetylene glycol-based |
| | TEGO Wet 280 | EVONIK | 0.2 | silicone-based |
| Pigment dispersion | Color Max W Eco black | Nippon Paint | 25.0 | commercially available pigment dispersion for aqueous paint carbon black 3.75% to 5%, other solid content 4.18% to 5.43%, diethanolamine 0.25% to 1.25%, other volatile content 13.32% to 16.82% |
| Total | | | 100.0 | |

[Method for evaluating aqueous ink composition]

(Preparation of evaluation specimen)

The aqueous ink composition produced was applied to various base materials shown in Table 2 with use of a bar coater No. 6 (thickness: 13.74 μm), dried in a dryer at 60°C for 10 minutes, and then aged at 23°C for 1 or more days. Products thus obtained were used as evaluation specimens.

[Table 2]

| Base material | Manufacturer | Product Name | Product Number | Thickness | Surface treatment |
|---|---|---|---|---|---|
| Biaxially stretched polypropylene (OPP) | TOYOBO | PYLEN (registered trademark) film-OT | P2161 | 20 μm | Corona treatment |

(continued)

| Base material | Manufacturer | Product Name | Product Number | Thickness | Surface treatment |
|---|---|---|---|---|---|
| Biaxially stretched polyethylene terephthalate (PET) | TOYOBO | Toyobo Ester (re-gistered trade-mark) film | E5102 | 12 μm | Corona treat-ment |
| Biaxially stretched ny-lon 6 (Ny) | TOYOBO | Harden (registered trademark) film | N1102 | 15 μm | Corona treat-ment |

(Evaluation of adhesion)

A cellophane tape (width: 18mm) having a length of approximately 10 cm was attached to and brought into firm contact with a surface of each of the evaluation specimens to which the ink composition had been applied. The cellophane tape attached was peeled off vigorously from the left end, and peeling of the ink was observed.

Determination was carried out in accordance with the following criteria. Note here that a "peel-off area" is an area of a part to which the ink was attached on a peeled-off cellophane tape. A peel-off area percentage (%) is a percentage of the "peel-off area" with respect to an area of a part where the cellophane tape was attached to the evaluation specimen.

A: The ink was not peeled off at all.
B: The peel-off area was less than 30%.
C: The peel-off area was not less than 30% and less than 70%.
D: The peel-off area was not less than 70% and less than 100%.
E: The ink was completely peeled off.

[Synthesis Example 1]

[Step 1]: Production of vinyl chloride resin emulsion

Into a polymerization container equipped with a stirrer, introduced were 120 parts of deionized water, 0.094 parts of sodium formaldehyde sulfoxylate, 0.044 parts of baking soda (sodium hydrogen carbonate), 0.65 parts of sodium lauryl sulfate, 0.00165 parts of ferrous sulfate heptahydrate, and 0.00275 parts of disodium ethylenediaminetetraacetate (EDTA-2Na).

After oxygen was removed from the polymerization container, 100 parts of a vinyl chloride monomer was introduced. A temperature of a mixture in a polymerization container was increased to 60°C, and an aqueous t-butyl hydroperoxide solution (0.1%) was continuously added over 270 minutes as a polymerization initiator so that the content of t-butyl hydroperoxide became 0.012 parts.

After 45 minutes from a time when polymerization was started (a time when the temperature of the mixture in the polymerization container reached 60°C), ADEKAREASOAP (registered trademark) SR-1025 (manufactured by ADEKA CORPORATION, active ingredient: 25%) in the form of an aqueous solution (5%) was evenly and continuously added over 165 minutes as a reactive surfactant so that the amount of ADEKAREASOAP SR-1025 became 1.35 parts in terms of the active ingredient.

When the internal pressure of the polymerization container decreased to not more than 0.5 MPa, the polymerization reaction was stopped. Then, unreacted vinyl chloride was removed, so that a vinyl chloride resin emulsion (PVC-1) was obtained.

The vinyl chloride resin emulsion (PVC-1) obtained had a polymerization conversion rate of 75%, an average particle diameter of 92 nm, and a solid content concentration of 33%. Note, here, that the average particle diameter and the solid content concentration of the vinyl chloride resin emulsion (each of PVC-1 and PVC-2 described below) were measured by respective methods similar to those for measuring the average particle diameter and the solid content concentration of the vinyl chloride-based resin emulsion etc. Further, the polymerization conversion rate was calculated by dividing the solid content concentration by a theoretical solid content concentration in a case where it was assumed that all introduced monomers were polymerized.

The indication was used.

[Synthesis Example 2]

[Step 1]: Production of vinyl chloride resin emulsion

Polymerization was carried out by the same operation as that in Synthesis Example 1, except that, for the purpose of introduction of a grafting point with an acrylic resin in a [step 2], 0.1 parts of triallyl cyanurate (TAC) was mixed with an aqueous ADEKAREASOAP (registered trademark) SR-1025 solution and then added. Then, unreacted vinyl chloride was removed, so that a vinyl chloride resin emulsion (PVC-2) was obtained.

The vinyl chloride resin emulsion (PVC-2) had a polymerization conversion rate of 74%, an average particle diameter of 85 nm, and a solid content concentration of 33%. Table 3 shows TAC amount. Note, here, that a TAC amount of 0.06 parts shown in Table 3 is an amount (parts by weight) of the TAC contained in 50 parts of a vinyl chloride resin, in consideration of the polymerization conversion rate of the vinyl chloride resin.

[Production Example 1]

[Step 2]: Production of composite resin emulsion

Into a polymerization container equipped with a stirrer, introduced were 157 parts of the vinyl chloride resin emulsion (PVC-1) produced in Synthesis Example 1 (equivalent to 50 parts of the vinyl chloride resin), 0.6 parts of polyoxyethylene polyoxypropylene lauryl ether (DKS Co. Ltd., NOIGEN (registered trademark) LP-180), and 7.5 parts of deionized water.

After oxygen was removed from the polymerization container, a temperature of a mixture in the polymerization container was increased to 50°C. Then, 0.028 parts of t-butyl hydroperoxide, which was a polymerization initiator, and 0.011 parts by weight of Bruggolite (registered trademark) FF-6 (manufactured by Bruggemann Chemical), which was a reducing agent, were added.

Furthermore, a monomer emulsified liquid was obtained by (i) adding, with respect to 50 parts of an acrylic monomer mixture shown in Step 2 of Production Example 1 in Table 3, 0.75 parts, in terms of an active ingredient, of Aqualon (registered trademark) AR-1025 (manufactured by DKS Co. Ltd., active ingredient: 25%), which was a reactive surfactant, 0.75 parts, in terms of an active ingredient, of LATEMUL (registered trademark) PD-430S (manufactured by Kao Corporation, active ingredient: 25%), which was a reactive surfactant, and 19 parts of deionized water (including that brought by the surfactants), and (ii) emulsifying these components by stirring. The monomer emulsified liquid obtained was evenly and continuously added to the polymerization container over 200 minutes. During the continuous addition of the monomer emulsified liquid, 0.049 parts of t-butyl hydroperoxide, which was a polymerization initiator, and 0.030 parts of Bruggolite (registered trademark) FF-6, which was a reducing agent, were additionally added in 8 portions to the polymerization container.

After the continuous addition of the monomer emulsified liquid was finished, postpolymerization was carried out for 90 minutes. Thereafter, a liquid temperature of a resultant reaction mixture was decreased to not higher than 40°C, neutralization was carried out with use of ammonia, and 0.5 parts of adipic acid dihydrazide (ADH) was added in the form of a 10% aqueous solution to 100 parts of all of the monomer mixture. Thereafter, a composite resin emulsion (HB-1A) was obtained by adjusting the solid content concentration of the reaction mixture to 40% with use of deionized water.

The emulsion properties (average particle diameter, particle size distribution, viscosity, MFT, and THF-insoluble content) of the composite resin emulsion (HB-1A) obtained were measured. Table 3 shows results of the above measurement, and the glass transition temperature of the vinyl chloride resin polymerized in Step 1 and the acrylic-containing resin polymerized in Step 2.

[Production Example 2]

[Step 2]: Production of composite resin emulsion

A composite resin emulsion (HB-2A) was obtained by carrying out the same operation as that in Production Example 1, except that: a vinyl chloride resin emulsion (PVC-2) produced in Synthesis Example 2 was used in place of the vinyl chloride resin emulsion (PVC-1); an acrylic monomer mixture shown in Step 2 of Production Example 2 in Table 3 was used as the acrylic monomer mixture; and 1.0 part of adipic acid dihydrazide (ADH) was added in the form of a 10% aqueous solution to 100 parts of all of the monomer mixture and the solid content concentration of the reaction mixture was adjusted to 38% with use of deionized water instead of adding 0.5 parts of adipic acid dihydrazide (ADH) in the form of a 10% aqueous solution to 100 parts of all of the monomer mixture and adjusting the solid content concentration of the reaction mixture to 40% with use of deionized water.

The emulsion properties (average particle diameter, particle size distribution, viscosity, MFT, and THF-insoluble content) of the composite resin emulsion (HB-2A) obtained were measured. Table 3 shows results of the above measurement, and the glass transition temperature of the vinyl chloride resin polymerized in Step 1 and the acrylic-containing resin polymerized in Step 2.

The composite resin emulsion obtained in each of Production Examples 1 and 2 exhibited a particle size distribution having a single peak. Moreover, an increase corresponding to the amount of the monomer added was observed in the average particle diameter of the composite resin emulsion obtained in each of Examples 1 and 2. In light of these, it is inferred that the vinyl chloride-based resin and the acrylic resin-based resin coexisted in the same particles. In other words, it is considered that composite particles of the vinyl chloride-based resin and the acrylic resin were obtained.

The composite resin emulsion obtained in each of Production Examples 1 and 2 had the same set Tg in Step 1 as the acrylic resin emulsion in each of Production examples 3 and 4 which was obtained by carrying out multistage polymerization with use of only an acrylic resin. However, the composite resin emulsion had a decreased minimum film forming temperature and exhibited good film forming properties. Further, according to a comparison between Production Example 1 and Production Example 2, the THF-insoluble content was further increased by introducing, into the vinyl chloride resin, (F) a compound having at least two non-conjugated double bonds.

In each of Production Examples 1 and 2, since the Tg of the acrylic-containing resin was not higher than -20°C, a decrease in minimum film forming temperature (MFT) was observed, and the film forming properties were enhanced.

[Table 3]

| Step | | Material | | Production Example 1 | Production Example 2 | Production Example 3 | Production Example 4 |
|---|---|---|---|---|---|---|---|
| | | | | HB-1A | HB-2A | AC-1A | AC-2A |
| Step 1 | (a1) | VCM | (Parts) | 50.00 | 50.00 | - | - |
| | (a2) | TBMA | (Parts) | - | - | | 21.25 |
| | | BMA | (Parts) | - | - | 12.00 | - |
| | | BA | (Parts) | - | - | | 5.00 |
| | | MMA | (Parts) | - | - | 34.50 | 23.75 |
| | | MAA | (Parts) | - | - | | - |
| | | DAAm | (Parts) | - | - | - | - |
| | | St | (Parts) | - | - | 3.50 | - |
| | (a1)+(a2) monomer total | | (Parts) | 50.00 | 50.00 | 50.00 | 50.00 |
| | Chain transfer agent | TAC | (Parts) | - | 0.06 | - | - |
| | | NDM | (Parts) | - | - | - | - |
| | | MMP | (Parts) | - | - | - | - |
| Step 2 | (b1) | BMA | (Parts) | 8.70 | 16.80 | 8.70 | 8.70 |
| | | BA | (Parts) | 32.20 | 28.20 | 32.20 | 32.20 |
| | | MMA | (Parts) | 5.10 | | 5.10 | 5.10 |
| | (b2) | MAA | (Parts) | 3.00 | 3.00 | 3.00 | 3.00 |
| | | DAAm | (Parts) | 1.00 | 2.00 | 1.00 | 1.00 |
| | (b1)+(b2) monomer total | | (Parts) | 50.00 | 50.00 | 50.00 | 50.00 |
| Post-addition | (D) | ADH | (Parts) | 0.50 | 1.00 | 0.50 | 0.50 |
| Glass transition temperature (°C) | | Step 1 | | 80 | 80 | 80 | 80 |
| | | Step 2 | | -22 | -22 | -22 | -22 |
| | | Overall average | | 19 | 19 | 19 | 19 |
| Solid content concentration | | | (%) | 40 | 38 | 40 | 40 |

(continued)

| Step | | Material | | Production Example 1 | Production Example 2 | Production Example 3 | Production Example 4 |
|---|---|---|---|---|---|---|---|
| | | | | HB-1A | HB-2A | AC-1A | AC-2A |
| Particle diameter * | Particle size distribution | | | single | single | single | single |
| | | | | peak | peak | peak | peak |
| | Average particle diameter | (nm) | | 115 | 102 | 105 | 117 |
| Weight average molecular weight* | | | | - | - | - | - |
| Viscosity | | (mPa·s) | | 287 | 68 | 452 | 1,450 |
| Minimum film forming temperature | | (°C) | | lower than 5 | lower than 5 | 75 | 68 |
| THF-insoluble content | | (%) | | 75 | 83 | 82 | 88 |

* Values of particle diameter and weight average molecular weight of WS-1 are values before neutralization (water-solubilization).

| | | | |
|---|---|---|---|
| VCM | Vinyl chloride monomer | DAAm | Diacetoneacrylamide |
| TBMA | t-butyl methacrylate | St | Styrene |
| BMA | n-butyl methacrylate | TAC | Triallyl cyanurate |
| BA | n-butyl acrylate | NDM | n-dodecylmercaptan |
| MMA | Methyl methacrylate | MMP | Methyl mercaptopropionate |
| MAA | Methacrylic acid | ADH | Adipic acid dihydrazide |

[Table 3] (Cont.)

| Step | | | Material | | Production Example 5 | Production Example 6 | Production Example 7 | Production Example 8 |
|---|---|---|---|---|---|---|---|---|
| | | | | | AC-3 | AC-3A | WS-1 | WS-1A |
| Step 1 | (a1) | VCM | (Parts) | | - | | - | |
| | (a2) | TBMA | (Parts) | | - | | - | |
| | | BMA | (Parts) | | - | | 2.10 | |
| | | BA | (Parts) | | 55.00 | | 2.10 | |
| | | MMA | (Parts) | | 33.00 | | 75.10 | |
| | | MAA | (Parts) | | 3.00 | | 18.70 | |
| | | DAAm | (Parts) | | 2.00 | | 2.00 | |
| | | St | (Parts) | | 7.00 | | - | |
| | (a1)+(a2) monomer total | | (Parts) | | 100.00 | | 100.00 | |
| | | TAC | (Parts) | | - | | - | |
| | Chain transfer agent | NDM | (Parts) | | - | | 2.00 | |
| | | MMP | (Parts) | | - | | 2.00 | |

(continued)

| Step | | Material | | Production Example 5 | Production Example 6 | Production Example 7 | Production Example 8 |
|---|---|---|---|---|---|---|---|
| | | | | AC-3 | AC-3A | WS-1 | WS-1A |
| Step 2 | (b1) | BMA | (Parts) | | | | |
| | | BA | (Parts) | | | | |
| | | MMA | (Parts) | | | | |
| | (b2) | MAA | (Parts) | | | | |
| | | DAAm | (Parts) | | | | |
| | (b1)+(b2) monomer | total | (Parts) | | | | |
| Post-addition | (D) | ADH | (Parts) | - | 1.00 | - | 1.00 |
| Glass transition temperature (°C) | | Step 1 | | -3 | | 103 | |
| | | Step 2 | | - | | - | |
| | | Overall average | | -3 | | 103 | |
| Solid content concentration | | | (%) | 38 | 37 | 28 | 27 |
| Particle diameter * | Particle size distribution | | | single peak | single peak | single peak | - |
| | Average particle diameter | | (nm) | 103 | 102 | 152 | - |
| Weight average molecular weight * | | | | - | - | 2,600 | - |
| Viscosity | | | (mPa·s) | 253 | 116 | 632 | 404 |
| Minimum film forming temperature | | | (°C) | lower than 5 | lower than 5 | - | - |
| THF-insoluble content | | | (%) | 3 | 100 | 64 | 73 |

* Values of particle diameter and weight average molecular weight of WS-1 are values before neutralization (water-solubilization).

| | | | |
|---|---|---|---|
| VCM | Vinyl chloride monomer | DAAm | Diacetoneacrylamide |
| TBMA | t-butyl methacrylate | St | Styrene |
| BMA | n-butyl methacrylate | TAC | Triallyl cyanurate |
| BA | n-butyl acrylate | NDM | n-dodecylmercaptan |
| MMA | Methyl methacrylate | MMP | Methyl mercaptopropionate |
| MAA | Methacrylic acid | ADH | Adipic acid dihydrazide |

[Production Example 3]: Production of acrylic resin emulsion (two stage emulsion polymerization)

[Step 1]

Into a polymerization container equipped with a stirrer, introduced were 76 parts of deionized water, 0.0125 parts of baking soda (sodium hydrogen carbonate), 0.44 parts of sodium lauryl sulfate, and 1/10 of 50 parts of a monomer mixture shown in Step 1 of Production Example 3 in Table 3.

After oxygen was removed from the polymerization container, a temperature of the mixture in the polymerization container was increased to 50°C. Then, 0.035 parts of t-butyl hydroperoxide, which was a polymerization initiator, 0.0007 parts of ferrous sulfate heptahydrate, 0.0028 parts of disodium ethylenediaminetetraacetate (EDTA·2Na), and 0.35 parts by weight of Bruggolite (registered trademark) FF-6, which was a reducing agent, were added. Thereafter, stirring was carried out for 30 minutes.

Subsequently, 0.021 parts of t-butyl hydroperoxide, which was a polymerization initiator, and 0.01125 parts of Bruggolite (registered trademark) FF-6, which was a reducing agent, were added to the polymerization container. A monomer emulsified liquid was obtained by (i) adding, to the remaining 9/10 of 50 parts of the monomer mixture shown in Step 1 of Production Example 3 in Table 3, 1.8 parts, in terms of an active ingredient, of ADEKAREASOAP (registered trademark) SR-1025, which was a reactive surfactant, 0.6 parts of NOIGEN (registered trademark) LP-180, and 19 parts of ion-exchanged water (including that brought by the surfactant) and (ii) emulsifying these components by stirring. The monomer emulsified liquid obtained was evenly and continuously added to the polymerization container over 180 minutes. During the continuous addition of the monomer emulsified liquid, 0.049 parts of t-butyl hydroperoxide, which was a polymerization initiator, and 0.040 parts of Bruggolite (registered trademark) FF-6, which was a reducing agent, were additionally added in 4 portions to the polymerization container.

[Step 2]

Subsequently, 0.028 parts of t-butyl hydroperoxide, which was a polymerization initiator, and 0.011 parts of Bruggolite (registered trademark) FF-6, which was a reducing agent, were added in the polymerization container.

A monomer emulsified liquid was obtained by (i) adding, with respect to 50 parts of a monomer mixture shown in Step 2 of Production Example 3 in Table 3, 0.75 parts, in terms of an active ingredient, of Aqualon (registered trademark) AR-1025 (manufactured by DKS Co. Ltd., active ingredient: 25%), which was a reactive surfactant, 0.75 parts, in terms of an active ingredient, of LATEMUL (registered trademark) PD-430S (manufactured by Kao Corporation, active ingredient: 25%), which was a reactive surfactant, and 19 parts of deionized water (including that brought by the surfactants), and (ii) emulsifying these components by stirring. The monomer emulsified liquid obtained was evenly and continuously added to the polymerization container over 200 minutes. During the continuous addition of the monomer emulsified liquid, 0.049 parts of t-butyl hydroperoxide and 0.030 parts of Bruggolite (registered trademark) FF-6 were additionally added in 8 portions to the polymerization container.

After the addition of the monomer emulsified liquid was finished, postpolymerization was carried out for 90 minutes. Thereafter, a liquid temperature of a resultant reaction mixture was decreased to not higher than 40°C, neutralization was carried out with use of ammonia, and 0.5 parts of adipic acid dihydrazide (ADH) was added in the form of a 10% aqueous solution to 100 parts of all of the monomer mixture. Thereafter, the solid content concentration of the reaction mixture was adjusted to 40% with use of deionized water, so that an acrylic resin emulsion (AC-1A) was obtained.

The emulsion properties (average particle diameter, particle size distribution, viscosity, MFT, and THF-insoluble content) of the acrylic resin emulsion (AC-1A) obtained were measured. Table 3 shows results of the above measurement, and the glass transition temperature of the acrylic-containing resin polymerized in Step 1 and the acrylic-containing resin polymerized in Step 2.

[Production Example 4]: Production of acrylic resin emulsion (two stage emulsion polymerization)

An acrylic resin emulsion (AC-2A) was obtained by carrying out the same operation as that in Production Example 3, except that monomer composition in the [step 1] of [Production Example 3] was changed to that shown in Step1 of Production Example 4 in Table 3.

The emulsion properties (average particle diameter, particle size distribution, viscosity, MFT, and THF-insoluble content) of the acrylic resin emulsion (AC-2A) obtained were measured. Table 3 shows results of the above measurement, and the glass transition temperature of the acrylic-containing resin polymerized in Step 1 and the acrylic-containing resin polymerized in Step 2.

[Production Example 5]: Production of acrylic resin emulsion (single stage emulsion polymerization)

A monomer emulsified liquid was obtained by (i) adding, to 100 parts of a monomer mixture (including the amount of methacrylic acid: 3 parts) shown in Step 1 of Production Example 5 in Table 3, 1.6 parts, in terms of an active ingredient, of ADEKAREASOAP (registered trademark) SR-1025 (manufactured by ADEKA CORPORATION, active ingredient: 25%), which was a reactive surfactant, and 41 parts of water (including that brought by the surfactant) and (ii) emulsifying these components by stirring.

Into a polymerization container equipped with a stirrer, introduced were 90 parts of deionized water, 0.0125 parts of baking soda, 0.1 parts of sodium lauryl sulfate, and 1/20 of the monomer emulsified liquid obtained. After oxygen was removed from the polymerization container, a temperature of the mixture in the polymerization container was increased to 50°C.

Then, 0.035 parts of t-butyl hydroperoxide, 0.0007 parts of ferrous sulfate heptahydrate, and 0.0028 parts of disodium ethylenediaminetetraacetate (EDTA·2Na), each of which was a polymerization initiator, and 0.035 parts of Bruggolite (registered trademark), which was a reducing agent, were added to the polymerization container, and stirring was carried out for 30 minutes.

Further, the remaining 19/20 of the monomer emulsified liquid was evenly and continuously added to the polymerization container over 285 minutes. During the continuous addition of the monomer emulsified liquid, 0.0857 parts of t-butyl hydroperoxide, which was a polymerization initiator, and 0.050 parts of Bruggolite (registered trademark) FF-6, which was a reducing agent, were additionally added in 8 portions to the polymerization container.

After addition of the monomer emulsified liquid was finished, postpolymerization was carried out for 90 minutes. Thereafter, the liquid temperature of a reaction mixture was decreased to not higher than 40°C, and neutralization was carried out with use of ammonia. Then, the solid content concentration of the reaction mixture was adjusted to 38% with use of deionized water. As a result, an acrylic resin emulsion (AC-3) was obtained.

The emulsion properties (average particle diameter, particle size distribution, viscosity, MFT, and THF-insoluble content) of the acrylic resin emulsion (AC-3) obtained were measured. Table 3 shows results of the measurement and the glass transition temperature of AC-3.

[Production Example 6]: Production of acrylic resin emulsion (single stage emulsion polymerization)

An acrylic resin emulsion (AC-3A) was obtained by adding 1.0 part of adipic acid dihydrazide (ADH), in the form of a 10% aqueous solution, with respect to 100 parts of all of the monomer mixture of the acrylic resin emulsion (AC-3) obtained in Production Example 5.

The emulsion properties (average particle diameter, particle size distribution, viscosity, MFT, and THF-insoluble content) of the acrylic resin emulsion (AC-3A) obtained were measured. Table 3 shows results of the measurement and the glass transition temperature of AC-3A.

Note that by setting Tg to -3°C, it was possible to obtain an MFT (film forming properties) that was comparable to that of a composite emulsion (overall average Tg: 19°C).

[Production Example 7]: Production of alkali-soluble resin

A monomer emulsified liquid was obtained by (i) adding, with respect to 100 parts (including an amount of methacrylic acid used: 18.7 parts) of a monomer and 4 parts of a chain transfer agent mixture which were shown in Step 1 of Production Example 7 in Table 3, 1.56 parts, in terms of an active ingredient, of Aqualon (registered trademark) AR-1025 (manufactured by DKS Co. Ltd., active ingredient: 25%), which was a reactive surfactant, 1.56 parts, in terms of an active ingredient, of LATEMUL (registered trademark) PD-430S (manufactured by Kao Corporation, active ingredient: 25%), which was a reactive surfactant, and 52.9 parts of deionized water (including that brought by the surfactants), and (ii) emulsifying these components by stirring.

Into a polymerization container equipped with a stirrer, introduced were 97 parts of deionized water, 0.013 parts of baking soda, and 1/20 of the monomer emulsified liquid obtained. After oxygen was removed from the polymerization container, a temperature of the mixture in the polymerization container was increased to 50°C.

Then, 0.36 parts of t-butyl hydroperoxide, 0.0007 parts of ferrous sulfate heptahydrate, and 0.0028 parts of disodium ethylenediaminetetraacetate (EDTA·2Na), each of which was a polymerization initiator, and 0.42 parts of Bruggolite (registered trademark), which was a reducing agent, were added to the polymerization container, and stirring was carried out for 30 minutes.

Further, the remaining 19/20 of the monomer emulsified liquid was evenly and continuously added to the polymerization container over 190 minutes. During the continuous addition of the monomer emulsified liquid, 0.65 parts of t-butyl hydroperoxide, which was a polymerization initiator, and 0.35 parts of Bruggolite (registered trademark) FF-6, which was a reducing agent, were additionally added in 6 portions to the polymerization container.

After addition of the monomer emulsified liquid was finished, postpolymerization was carried out for 90 minutes. Thereafter, the liquid temperature of a reaction mixture was decreased to not higher than 40°C, and neutralization was carried out with use of ammonia. Then, the solid content concentration of the reaction mixture was adjusted to 28% with use of deionized water. As a result, a transparent alkali-soluble resin (WS-1) was obtained.

The properties (average particle diameter, particle size distribution, weight average molecular weight, viscosity, MFT, and THF-insoluble content) of the alkali-soluble resin (WS-1) obtained were measured. Table 3 shows results of the measurement and the glass transition temperature of WS-1. Note, however, that the average particle diameter, the particle size distribution, and the weight average molecular weight could not be measured after water-solubilization. Therefore, the average particle diameter, the particle size distribution, and the weight average molecular weight were measured with use of WS-1 prior to neutralization with ammonia.

[Production Example 8]: Production of alkali-soluble resin

An alkali-soluble resin (WC-1A) was obtained by adding 1.0 part by weight of adipic acid dihydrazide (ADH), in the form of a 10% aqueous solution, with respect to 100 parts of all of the monomer mixture of the alkali-soluble resin (WS-1) obtained in Production Example 7.

The properties (viscosity and THF-insoluble content) of the alkali-soluble resin (WS-1A) obtained were measured. Table 3 shows results of the measurement and the glass transition temperature of WS-1A.

[Comparative Examples 1 to 10]

Aqueous ink compositions were produced with use of components shown in Table 4. Adhesion of the aqueous ink compositions obtained were evaluated. Table 4 shows results of this evaluation.

[Table 4]

| | Resin | Note | Comparative Example | | | | | | | | | |
|---|---|---|---|---|---|---|---|---|---|---|---|---|
| | | | 1 | 2 | 3 | 4 | 5 | 6 | 7 | 8 | 9 | 10 |
| (A) | HB-1A | Production Example 1 | 100 | | | | | | | | | |
| | HB-2A | Production Example 2 | | 100 | | | | | | | | |
| | AC-1A | Production Example 3 | | | 100 | | | | | | | |
| | AC-2A | Production Example 4 | | | | 100 | | | | | | |
| | AC-3 | Production Example 5 | | | | | 100 | | | | | |
| | AC-3A | Production Example 6 | | | | | | 100 | | | | |
| | XK-190 | Commercially Available Product | | | | | | | 100 | | | |
| (B) | E-480T | Commercially Available Product | | | | | | | | 100 | | |
| (C) | WS-1 | Production Example 7 | | | | | | | | | 100 | |
| | WS-1A | Production Example 8 | | | | | | | | | | 100 |
| Adhesion | OPP | | C | C | B | C | E | C | B | B | E | E |
| | PET | | E | E | E | E | C | C | E | E | E | E |
| | Ny | | C | B | C | D | E | B | C | E | E | C |

In Tables 4 to 8, "XK-190", which is expressed as "(A) component", refers to NeoCryl (registered trademark) XK-190 (acrylic resin-based emulsion manufactured by Covestro AG), "E-480T", which is expressed as "(B) component", refers to SUPERCHLON (registered trademark) E-480T (chlorinated polypropylene-based emulsion manufactured by Nippon Paper Industries Co., Ltd.). In Tables 4 to 8, units of respective component amounts are "parts" (parts by weight).

[Example 1]

An aqueous ink composition was produced according to composition shown in Table 5. Adhesion of the aqueous ink composition obtained was evaluated. Table 5 shows a result of this evaluation.

[Table 5]

| | Resin | Note | Example |
|---|---|---|---|
| | | | 1 |
| (A) | HB-1A | Production Example 1 | 70 |
| | HB-2A | Production Example 2 | |
| | AC-1A | Production Example 3 | |
| | AC-2A | Production Example 4 | |
| | AC-3 | Production Example 5 | |
| | AC-3A | Production Example 6 | |
| | XK-190 | Commercially Available Product | |
| (B) | E-480T | Commercially Available Product | 30 |
| (C) | W5-1 | Production Example 7 | |
| | WS-1A | Production Example 8 | |
| Adhesion | OPP | | B |

As shown in Table 5, the aqueous ink composition of Example 1 contains the vinyl chloride-acrylic composite resin emulsion (HB-1A) and a polyolefin-based resin emulsion. It is clear that this aqueous ink composition has better adhesion to OPP than an aqueous ink composition of Comparative Example 1 containing only HB-1A.

[Examples 2 and 3]

An aqueous ink composition was produced according to composition shown in Table 6. Adhesion of the aqueous ink composition obtained was evaluated. Table 6 shows a result of this evaluation.

[Table 6]

| | Resin | Note | Example | |
|---|---|---|---|---|
| | | | 2 | 3 |
| (A) | HB-1A | Production Example 1 | 80 | 60 |
| | HB-2A | Production Example 2 | | |
| | AC-1A | Production Example 3 | | |
| | AC-2A | Production Example 4 | | |
| | AC-3 | Production Example 5 | | |
| | AC-3A | Production Example 6 | | |
| | XK-190 | Commercially Available Product | | |
| (B) | E-480T | Commercially Available Product | | |
| (C) | WS-1 | Production Example 7 | | |
| | WS-1A | Production Example 8 | 20 | 40 |
| Adhesion | Ny | | B | B |

As shown in Table 6, the aqueous ink compositions of Examples 2 and 3 each contain the vinyl chloride-acrylic composite resin emulsion (HB-1A) and the alkali-soluble resin. It is clear that this aqueous ink composition has better adhesion to Ny than the aqueous ink composition of Comparative Example 1 containing only HB-1A.

[Examples 4 to 12]

An aqueous ink composition was produced according to composition shown in Table 7. Adhesion of the aqueous ink composition obtained was evaluated. Table 7 shows results of this evaluation.

[Table 7]

| | Resin | Note | Example | | | | | | | | |
|---|---|---|---|---|---|---|---|---|---|---|---|
| | | | 4 | 5 | 6 | 7 | 8 | 9 | 10 | 11 | 12 |
| (A) | HB-1A | Production Example 1 | 60 | 60 | 60 | 70 | 70 | 70 | 80 | 80 | 80 |
| | HB-2A | Production Example 2 | | | | | | | | | |
| | AC-1A | Production Example 3 | | | | | | | | | |
| | AC-2A | Production Example 4 | | | | | | | | | |
| | AC-3 | Production Example 5 | | | | | | | | | |
| | AC-3A | Production Example 6 | | | | | | | | | |
| | XK-190 | Commerciall y Available Product | | | | | | | | | |
| (B) | E-480T | Commerciall y Available Product | 20 | 30 | 10 | 15 | 20 | 10 | 10 | 15 | 5 |
| (C) | WS-1 | Production Example 7 | | | | | | | | | |
| | WS-1A | Production Example 8 | 20 | 10 | 30 | 15 | 10 | 20 | 10 | 5 | 15 |
| Adhesion | OPP | | B | B | C | B | B | C | B | B | B |
| | PET | | C | D | C | C | D | D | E | E | D |
| | Ny | | C | C | C | C | C | C | C | C | C |

As shown in Table 7, the aqueous ink compositions of Examples 4 to 12 each contain the vinyl chloride-acrylic composite resin emulsion (HB-1A), the polyolefin-based resin emulsion and the alkali-soluble resin. It is clear that the aqueous ink composition has better adhesion to OPP and/or PET than the aqueous ink composition of Comparative Example 1 containing only HB-1A, and has adhesion to Ny which was as good as that of the aqueous ink composition of Comparative Example 1.

[Examples 13 to 18]

An aqueous ink composition was produced according to composition shown in Table 8. Adhesion of the aqueous ink composition obtained was evaluated. Table 8 shows results of this evaluation.

[Table 8]

| | Resin | Note | Example | | | | | | Comparative Example | | |
|---|---|---|---|---|---|---|---|---|---|---|---|
| | | | 13 | 14 | 15 | 16 | 17 | 18 | 11 | 12 | 13 |
| (A) | HB-1A | Production Example 1 | | | | | | | | | |
| | HB-2A | Production Example 2 | 60 | | | | | | | | |
| | AC-1A | Production Example 3 | | 60 | | | | | | | |
| | AC-2A | Production Example 4 | | | 60 | | | | | | |
| | AC-3 | Production Example 5 | | | | 60 | | | | | |
| | AC-3A | Production Example 6 | | | | | 60 | | | | |
| | XK-190 | Commerciall y Available Product | | | | | | 60 | | | |
| (B) | E-480T | Commerciall y Available Product | 20 | 20 | 20 | 20 | 20 | 20 | 50 | 67 | 33 |
| (C) | WS-1 | Production Example 7 | | | | 20 | | | | | |
| | WS-1A | Production Example 8 | 20 | 20 | 20 | | 20 | 20 | 50 | 33 | 67 |

(continued)

| | Resin | Note | Example | | | | | | Comparative Example | | |
|---|---|---|---|---|---|---|---|---|---|---|---|
| | | | 13 | 14 | 15 | 16 | 17 | 18 | 11 | 12 | 13 |
| Adhesion | OPP | | B | B | B | C | B | B | C | C | D |
| | PET | | C | E | E | C | C | E | E | E | E |
| | Ny | | B | B | B | C | B | B | D | E | D |

As shown in Table 8, the aqueous ink compositions of Examples 13 to 18 each contain the vinyl chloride-acrylic composite resin emulsion (HB-2A) or the acrylic resin emulsion (AC-1A, AC-2A, AC-3, AC-3A, or XK-190), the polyolefin-based resin emulsion, and the alkali-soluble resin. It is clear that this aqueous ink composition has enhanced adhesion to any one selected from the group consisting of OPP, PET, and Ny as compared with the aqueous ink composition of each of Comparative Examples 2 to 7 containing only HB-2A, AC-1A, AC-2A, AC-3, AC-3A, or XK-190.

Further, the aqueous ink composition of Example 13 using the vinyl chloride-acrylic composite resin emulsion (HB-2A) that has TAC which is a compound having at least two non-conjugated double bonds had better adhesion to a base material than the aqueous ink composition of Example 1 which contains the vinyl chloride-acrylic composite resin emulsion (HB-1A) having no TAC, the polyolefin-based resin emulsion and the alkali-soluble resin in the same composition as the aqueous ink composition of Example 13.

Note that the aqueous ink compositions of Comparative Example 7 and Example 16 exhibit good adhesion performance. However, these aqueous ink compositions were confirmed to have tackiness as compared with a case where a vinyl chloride-acrylic composite resin emulsion was used. This is considered to be caused by setting the Tg low for ensuring film forming properties (for making MFT low).

[Comparative Examples 11 to 13]

An aqueous ink composition was produced according to composition shown in Table 8. Adhesion of the aqueous ink composition obtained was evaluated. Table 8 shows results of this evaluation.

It was shown that the aqueous ink composition which does not contain the component (A) was inferior in adhesion performance.

Industrial Applicability

An embodiment of the present invention makes it possible to provide an aqueous ink composition that has excellent adhesion with respect to at least one base material selected from the group consisting of a polyolefin base material, a polyester base material, and a polyamide base material. The aqueous ink composition in accordance with an embodiment of the present invention can thus be very useful as paint or ink which can be used for any of various base materials, and can be used in a wide range of industrial fields.

**Claims**

1. An aqueous ink composition, comprising:

    (A) a vinyl chloride-based resin emulsion and/or an acrylic resin emulsion; and

    at least one selected from the group consisting of (B) a polyolefin-based resin emulsion and (C) an alkali-soluble resin.

2. The aqueous ink composition according to claim 1, containing all of the (A), the (B) and the (C) such that respective mixing ratios of the (A), the (B), and the (C) are (A) 20% by weight to 90% by weight, (B) 5% by weight to 40% by weight, and (C) 5% by weight to 40% by weight.

3. The aqueous ink composition according to claim 1, wherein the (A) has a carbonyl group derived from a keto group or an aldehyde group and further includes (D) a hydrazine derivative having at least two hydrazino groups or at least two semicarbazide groups per molecule.

4. The aqueous ink composition according to claim 1, wherein the (C) has a carbonyl group derived from a keto group or an aldehyde group and further includes (D) a hydrazine derivative having at least two hydrazino groups or at least two semicarbazide groups per molecule.

5. The aqueous ink composition according to claim 1, wherein the (B) is a chlorinated polypropylene resin emulsion.

6. The aqueous ink composition according to claim 1, further comprising (E) a pigment.

7. The aqueous ink composition according to claim 1, wherein the (A) vinyl chloride-based resin emulsion is an emulsion of a composite resin which is obtained by carrying out the following [step 1] and [step 2]:

   [Step 1]
   a step of obtaining a vinyl chloride resin by carrying out emulsion polymerization of a monomer mixture constituted by more than 90 parts by weight and not more than 100 parts of (a1) a vinyl chloride monomer and not less than 0 parts by weight and less than 10 parts by weight of (a2) an ethylenically unsaturated monomer that is copolymerizable with the vinyl chloride monomer (wherein a total amount of (a1) and (a2) is 100 parts by weight); and
   [Step 2]
   a step of obtaining an acrylic-containing resin by carrying out, in the presence of the vinyl chloride resin, emulsion polymerization of a monomer mixture constituted by 50 parts by weight to 100 parts by weight of (b1) (meth)acrylic acid alkyl ester and 0 parts by weight to 50 parts by weight of (b2) an ethylenically unsaturated monomer that is copolymerizable with the (meth)acrylic acid alkyl ester (wherein a total amount of (b1) and (b2) is 100 parts by weight).

8. The aqueous ink composition according to claim 1, wherein the (C) is obtained by emulsion polymerization.

9. A printed product obtained by printing, on a base material, the aqueous ink composition recited in claim 1.

## INTERNATIONAL SEARCH REPORT

| | International application No. |
|---|---|
| | **PCT/JP2023/032966** |

**A. CLASSIFICATION OF SUBJECT MATTER**

*C09D 11/023*(2014.01)i; *C09D 11/106*(2014.01)i; *C09D 11/107*(2014.01)i; *C09D 11/108*(2014.01)i
FI: C09D11/023; C09D11/106; C09D11/107; C09D11/108

According to International Patent Classification (IPC) or to both national classification and IPC

**B. FIELDS SEARCHED**

Minimum documentation searched (classification system followed by classification symbols)

C09D11/023; C09D11/106; C09D11/107; C09D11/108

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-261805 A (SEIKO EPSON CORP.) 19 September 2003 (2003-09-19) example 3 | 1-2, 6, 8-9 |
| A | example 3 | 3-5, 7 |
| X | JP 2005-52984 A (SEIKO EPSON CORP.) 03 March 2005 (2005-03-03) table 2 | 1-2, 6, 8-9 |
| A | table 2 | 3-5, 7 |
| A | JP 2018-12219 A (SAKATA INX CORP.) 25 January 2018 (2018-01-25) entire text, all drawings | 1-9 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 October 2023** | **14 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| International application No. |
|---|
| **PCT/JP2023/032966** |

| Patent document cited in search report | | | Publication date (day/month/year) | Patent family member(s) | | | Publication date (day/month/year) |
|---|---|---|---|---|---|---|---|
| JP | 2003-261805 | A | 19 September 2003 | US 2004/0249018 A1 example 3 | | | |
| | | | | EP 1460112 A1 | | | |
| | | | | CN 1608113 A | | | |
| JP | 2005-52984 | A | 03 March 2005 | (Family: none) | | | |
| JP | 2018-12219 | A | 25 January 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018012219 A
- JP 52022878 A
- JP 8151358 A
- JP 8245878 A
- JP 6247317 B
- WO 2010140647 A

- JP 10176132 A
- JP 2006070236 A
- WO 2018088560 A
- JP 2013193324 A
- JP 10298233 A